(19) Europäisches Patentamt
European Patent Office
Office européen des brevets

(11) Numéro de publication : **0 286 483 B1**

(12) # FASCICULE DE BREVET EUROPEEN

(45) Date de publication du fascicule du brevet : **13.05.92 Bulletin 92/20**

(51) Int. Cl.[5] : **H04N 7/137,** G06F 15/70

(21) Numéro de dépôt : **88400649.5**

(22) Date de dépôt : **18.03.88**

(54) **Procédé et dispositif d'estimation de mouvement dans une séquence d'images animées.**

(30) Priorité : **23.03.87 FR 8703991**
**11.12.87 FR 8717289**

(43) Date de publication de la demande : **12.10.88 Bulletin 88/41**

(45) Mention de la délivrance du brevet : **13.05.92 Bulletin 92/20**

(84) Etats contractants désignés : **DE GB NL**

(56) Documents cités :
**US-A- 4 232 338**
**IEEE ICASSP 85 PROCEEDINGS, vol. 1/4, 26-29 mars 1985, pages 347-350, IEEE, New York, US; R.J. MOORHEAD et al.:"Motion-compensated interframe coding"**

(56) Documents cités :
**IEEE TRANSACTIONS ON COMMUNICATIONS, vol. COM-32, no. 8, août 1984, pages 954-968, IEEE; S. SABRI: "Movement compensatedinterframe prediction for NTSC color tv signals"**
**PROCEEDINGS OF EUSIPCO-80, 16-18 septembre 1980, pages 143-148, North-Holland Publishing Co., Lausanne, CH; A.N. NETRAVALI etal.: "Interframe coding with recursive motion estimation"**

(73) Titulaire : **THOMSON-CSF**
**51, Esplanade du Général de Gaulle**
**F-92800 Puteaux (FR)**

(72) Inventeur : **Rouvrais, Bernard**
**Thomson-CSF SCPI 19, Avenue de Messine**
**F-75008 Paris (FR)**
Inventeur : **Kerdranvat, Michel**
**Thomson-CSF SCPI 19, Avenue de Messine**
**F-75008 Paris (FR)**
Inventeur : **Robert, Philippe**
**Thomson-CSF SCPI 19, Avenue de Messine**
**F-75008 Paris (FR)**

(74) Mandataire : **Lincot, Georges et al**
**THOMSON-CSF SCPI**
**F-92045 PARIS LA DEFENSE CEDEX 67 (FR)**

EP 0 286 483 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé et un dispositif d'estimation de mouvement dans une séquence d'images animées.

Elle s'applique notamment à la réalisation de systèmes de télévision numérique et de réduction du débit des informations transmises dans ses systèmes notamment.

Pour estimer le mouvement dans une séquence d'images, il est connu soit d'effectuer une mise en correspondance des traits caractéristiques de celles-ci, soit d'appliquer une méthode d'estimation différentielle en exploitant les gradients spatiaux et temporels des points représentatifs. Dans ce dernier cas cependant, l'initialisation des algorithmes de gradient employés est difficile à maîtriser. Par exemple, suivant une première méthode, il est connu d'assurer un suivi temporel de quelques points caractéristiques (points anguleux, contours ...) pour estimer leur mouvement et initialiser un algorithme de gradient, mais dans ce cas, il est impératif avant d'effectuer ce suivi, de résoudre les problèmes d'extraction et de mise en correspondance des points anguleux, ce qui est laborieux et donne des résultats encore très imparfaits.

Il est également connu, suivant une deuxième méthode, de rendre minimal l'écart quadratique des variations locales de luminance inter-image, éventuellement inter-trame, et de procéder à l'initialisation de l'algorithme de gradient par l'estimée du mouvement au point qui précède le point courant sur la même ligne. Dans ce cas, la convergence de l'algorithme dépend en grande partie de la phase d'initialisation employée et celle-ci est généralement faite en prenant pour déplacement celui estimé au point qui précède le point courant dans le sens du balayage de l'image. Cependant pour obtenir un résultat valable, le mouvement observé doit être lent, ses caractéristiques devant peu varier d'un point à l'autre d'une ligne balayée, et il doit permettre de privilégier une direction et un sens de déplace ment. Selon une autre variante, le déplacement estimé au point homologue dans l'image précédente est encore utilisé mais ceci suppose comme précédemment une faible variation temporelle du mouvement et nécessite l'utilisation d'une mémoire d'image de déplacement. D'autre part, des problèmes se posent dans les zones de ruptures, tant spatiales que temporelles du mouvement lorsque ces zones sont formées par des contours reflétant des objets en mouvement.

Le but de l'invention est de pallier les inconvénients précités.

A cet effet, l'invention a pour objet un procédé d'estimation de mouvement dans une séquence d'images animées du type télévision où chaque image est formée par un nombre déterminé de points lumineux disposés aux croisements de lignes et de colonnes, du type dans lequel l'estimation de mouvement est obtenue par l'exécution d'un algorithme de gradient qui rend minimal l'écart quadratique des variations locales de luminance du point courant de l'image avec le point qui lui est homologue dans l'image précédente caractérisé en ce qu'il consiste à initialiser l'exécution de l'algorithme par des valeurs de déplacements estimées selon plusieurs directions à l'intérieur du proche voisinage causal du point courant et à propager chaque estimation dans le sens du balayage des lignes de l'image.

Selon une autre variante de réalisation le procédé selon l'invention consiste à déterminer un champ de mouvement entre deux trames successives d'une séquence d'images sous la forme d'un champ de vecteurs attribué à une trame d'image fictive localisée à proximité des deux trames.

L'invention a également pour objet un dispositif pour la mise en oeuvre du procédé précité.

En associant plusieurs valeurs initiales dans plusieurs directions de déplacement l'invention a pour principal avantage qu'elle permet d'éviter d'avoir à détecter les contours en mouvement et d'estimer leur mouvement par mise en correspondance avec les contours de l'image précédente par réinitialisation de l'algorithme de déplacement au niveau de ces contours. En se donnant plusieurs directions possibles du mouvement, bien que tous les sens de mouvement ne soient pas envisagés on obtient ainsi une représentation plus vraie du sens de déplacement réel du point courant.

Le procédé et le dispositif selon l'invention ont également pour avantage qu'ils permettent de reconstituer des valeurs de luminance des pixels d'une trame manquante dans une suite d'images présentant une même scène. Comme chaque pixel est muni d'un vecteur mouvement et est interpolé à partir des trames connues l'encadrant dans la direction du vecteur mouvement associé, la reconstruction des pixels d'une trame manquante est automatiquement adaptée au mouvement. L'intérêt d'une telle interpolation est qu'elle rend possible la conversion d'une suite d'images vidéo de fréquence trame définie dans un standard vers un autre standard. Elle permet par exemple, le passage d'un standard où la fréquence trame est à 50 Hz vers un autre standard où la fréquence trame est à 60 Hz. Dans ce cas, comme les instants de prise de vue à la fréquence de 60 Hz et à la fréquence de 50 Hz ne coïncident pas, le procédé selon l'invention permet avantageusement l'interpolation des trames manquantes à partir des trames disponibles.

D'autres caractéristiques et avantages de l'invention apparaîtront ci-après à l'aide de la description faite en regard des dessins annexés qui représentent :

– la figure 1 un organigramme décrivant le procédé selon l'invention,

– la figure 2 les zones d'estimation et d'exploration,
– les figures 3A, 3B et 3C, le sens de propagation de l'estimation de mouvement dans une trame, et la détermination des valeurs initiales pour les lignes impaires et paires respectivement,
– la figure 4 un graphe pour illustrer le mode de calcul du gradient du point courant,
– la figure 5 un graphe montrant un déplacement dans une image précédent l'image courante,
– la figure 6 une représentation d'un zone d'exploration,
– la figure 7 un organigramme pour illustrer l'algorithme de décision mis en oeuvre dans l'invention,
– la figure 8 un mode de réalisation d'un dispositif de détermination du gradient dans une image courante selon l'invention,
– la figure 9 un mode de réalisation d'un dispositif d'estimation de déplacement à quatre branches selon l'invention,
– les figures 10A et 10B de représentation des états de la mémoire ligne d'initialisation dans les deux sens de balayage,
– la figure 11 un schéma synoptique détaillé d'une des branche du dispositif d'estimation de déplacement selon l'invention,
– la figure 12 une illustration du procédé d'estimation de mouvement intertrame par attribution d'un champ de vecteurs à une trame fictive,
– la figure 13 un organigramme pour illustrer le fonctionnement du procédé d'estimation de mouvement correspondant à l'illustration de la figure 12,
– les figures 14A, 14B et 14C, le sens de propagation de l'estimation de mouvement dans une trame, mis en oeuvre par le procédé illustré à la figure 13,
– la figure 15, une illustration du calcul de la différence interimage déplacée et du gradient de luminance dans le cas d'une trame fictive,
– la figure 16, une représentation de la zone où est située l'extrémité du vecteur mouvement pour un point courant (IX, IY, Tj) d'une trame fictive dans une trame réelle,
– la figure 17, une organisation générale du dispositif d'estimation du mouvement correspondant au procédé illustré par les figures 12 à 16,
– la figure 18, le dispositif d'estimation du vecteur déplacement pour la mise en oeuvre du procédé illustré par les figures 12 à 16,
– les figures 19A et 19B, un exemple de mémorisation des vecteurs déplacement pour la prédiction dans le cas d'une utilisation de trames fictives, selon le sens du balayage,
– la figure 20 un schéma synoptique détaillé d'une réalisation d'un dispositif d'estimation de déplacement de la figure 19.

Le procédé selon l'invention qui est décrit ci-après repose sur l'utilisation d'un algorithme d'estimation de déplacement du type de celui qui est décrit dans un article de la publication BELL SYSTEM TECHNOLOGIE volume 58 pages 631 à 670 de MARS 1979 Part.1 ayant pour titre "Motion compensated television coding" et pour auteur A.N NETRAVALI et JD. ROBBINS. L'algorithme de gradient qui y est développé rend minimal l'écart quadratique des variations locales de luminance de chaque point courant d'une image de télévision entre le point courant et le point qui lui est homologue dans l'image précédente.

L'expression de cet algorithme est définie par une relation de la forme :

$$- D_i(z,t) = D_{i-1}(z,t) - \text{epsilon} . DFD(z, D_{i-1}) . \overrightarrow{\text{grad}}\, I(z - D_{i-1}, t-T) \quad (1)$$

– où z(x,y) désigne les coordonnées spatiales du point courant P(z,t), en fonction de sa position repérée dans le plan (x, y) de l'image.
– I(z,t) est la luminance du point courant P(z,t) à l'instant t.
– $D_i(z,t)$ est le déplacement estimé au point P(z,t) à l'itération i et DFD(z,D) désigne la différence interimage déplacée, cette différence vérifiant la relation :

$$DFD(z,D) = I(z,t) - I(z-D,t-T) \quad (2)$$

– T désigne la période image
et

$$\overrightarrow{\text{grad}}\, I(z,t)$$

désigne le vecteur gradient du point courant P(z,t).

epsilon désigne le gain de l'algorithme.

Pour améliorer la vitesse et la précision de convergence de l'algorithme, espsilon est défini par la relation :

$$\text{epsilon} = 1/2.\,|\overrightarrow{\mathbf{grad}}\ I(z-D_{i-1},t-1|^2 \quad (3)$$

où

$$|\overrightarrow{\mathbf{grad}}\ I(z-D_{i-1},t-1)|^2 = \overrightarrow{\mathbf{grad}}^2_x\ I(z-D_{i-1},t-1)+\overrightarrow{\mathbf{grad}}^2_y I(z-D_{i-1},t-1) \quad (4)$$

avec la condition que si :

$$|\overrightarrow{\mathbf{grad}}\ I(z-D_{i-1},t-1)|^2 = 0,\ \text{alors epsilon} = 0 \quad (5)$$

La relation (3) fait apparaître que plus le gradient devient grand plus le terme correctif au déplacement estimé à l'itération précédente décroît. Pour estimer le mouvement le procédé selon l'invention utilise les différences inter-image existantes entre deux images successives $IMS_{t-1}$ et $IMS_t$ dans une séquence d'images, $IMS_t$ désignant l'image à l'instant t et $IMS_{t-1}$ l'image précédente, l'unité de temps considérée étant la période image. Le procédé se déroule suivant plusieurs étapes qui sont représentées schématiquement sur l'organigramme de la figure 1. Selon une première étape représentée en 1 à la figure 1, chaque image courante IMS est analysée point à point en balayant chaque ligne. Le gradient de luminance de chaque point courant de coordonnée z = (x,y) dans le plan d'images est calculé à l'étape 2, sa valeur absolue est comparée à l'étape 3 à une valeur de seuil déterminée de référence Sg. Si la valeur du gradient trouvé à l'étape 3 est inférieure au seuil Sg, le procédé exécute l'étape 4 qui consiste à choisir un déplacement dans le voisinage causal du point courant P(z,t). Par contre, si à l'étape 3 la valeur du gradient trouvé est supérieure au seuil Sg, le procédé exécute les traitements indiqués à l'étape 5 pour estimer quatre nouveaux déplacements à partir de quatre valeurs initiales de déplacement dans le voisinage causal du point courant. A la fin de l'exécution de l'étape 5 le procédé passe à l'exécution de l'étape 6 et fait le choix d'un déplacement parmi les quatre déplacements qui ont été estimés à l'étape 5. Le procédé se déroule ainsi par itérations successives, chaque fin d'exécution des étapes 4 ou 6 provoquant l'initialisation du point suivant (étape 7) et les déplacements sont enregistrés à l'étape 8.

Le déplacement estimé est limité dans l'image en lignes et en colonnes à l'intérieur d'un rectangle de coordonnées $\pm DX_{MAX}$ et $\pm DY_{MAX}$ par rapport au point courant. La zone d'estimation du mouvement dans l'image courante est limitée à par $DX_{MAX}$ et $DY_{MAX}$ (figure 2). La recherche du point déplacé se fait dans toute l'image précédente.

L'image est composée de deux trames entrelacées, une trame 1 et une trame 2. Dans l'analyse la trame 1 est prise à l'instant t et la trame 2 à l'instant $t+\frac{T}{2}$, T représentant la période image. L'estimation du mouvement a lieu suivant un mode inter-image c'est-à-dire en comparant les trames 1 et les trames 2 de deux images successives. Si m désigne le nombre de lignes comprises dans une image, les lignes de la trame 1 sont numérotées de 1 à $\frac{m}{2}$ et celles de la trame 2 sont numérotées de $\frac{m}{2}+1$ à m.

Une représentation des zones d'estimations correspondantes est montrée à la figure 2 sous la forme d'un rectangle pour chacune des trames 1 et 2 respectivement de l'image courante IMS(t) et de l'image précédente IMS(t-T). Sur cette figure DC et FC désignent respectivement la première et la dernière colonne utile de l'image, $DL_1$ et $FL_1$ désignent respectivement la première et la dernière ligne utile de la trame n° 1 et $DL_2$ et $FL_2$ désignent respectivement la première et la dernière ligne utile de la trame n° 2.

En désignant par P(k,l) le point de l'image courante dont le mouvement est estimé, la zone d'estimation $Z_1$ de la trame 1 est définie par la relation

$$Z_1 : |\ p(k,l)/K \text{ appartient à}[DC + DX_{MAX},FC-DX_{MAX}]$$

et

l appartient à

$$[DL_1 + DY_{MAX},FL_1-DY_{MAX}]\ | \quad (6)$$

et celle de la trame 2 est définie par la relation

$$Z_2 : |\ p(k,l)/K \text{ appartient à}[DC + DX_{MAX},FC-DX_{MAX}]$$

et
l appartient à

$$[DL_2 + DY_{MAX}, FL_2 - DY_{MAX}] \mid \quad (7)$$

Les déplacements qui sont estimés dans le plus proche voisinage causal du point courant servent à initialiser l'algorithme d'estimation de mouvement. Ce voisinage causal contient quatre déplacements qui sont utilisés pour initialiser quatre estimations de mouvement en parallèle.

La propagation de l'estimation suit dans le procédé le balayage normal des images de télévision. Cependant pour éviter de privilégier un sens de propagation dans l'image de la gauche vers la droite par exemple, le sens de balayage est inversé une ligne sur deux de façon alternée. Une représentation de ce balayage en lignes paires et impaires alternées est représentée à la figure 3A et les valeurs initiales $D_0^A$, $D_0^B$, $D_0^C$ et $D_0^D$ pour les lignes impaires et paires sont représentées respectivement aux figures 3B et 3C.

En suivant la représentation de la figure 4, le calcul du gradient dans l'image courante est effectué au point courant P(z,t) suivant le balayage de la ligne courante. Comme ce calcul respecte la causalité il est différent suivant le sens de balayage. Pour une ligne impaire le gradient vérifie la relation :

$$grad_x = I(k,l)-I(k-1,l); \; grad_y = I(k,l)-I(k,l-1) \quad (8)$$

pour une ligne paire le gradient vérifie la relation

$$grad_x = I(k+1,l)-I(k,l) \; ; \; grad_y = I(k,l)-I(k,l-1) \quad (9)$$

$$|\overrightarrow{grad}\, I(z,t)| = \sqrt{grad^2_x + grad^2_y} \quad (10)$$

Comme l'algorithme de base employé est un algorithme de gradient, aucune itération (nouvelle estimation de déplacement) n'est faite dans les zones à gradients faibles. Le seuil Sg est le seuil employé sur le module du gradient courant.

Pour effectuer l'interpolation et le calcul des gradients dans l'image précédente, chaque déplacement $D=(D_x,D_y)$ est décomposé suivant ses deux composantes $D_x$ et $D_y$ suivant les relations :
$D_x = ID_x + FD_x$ et $D_y = ID_y + FD_y$, où ID et FD désignent respectivement les parties entières et décimales du déplacement.

L'unité du déplacement en X est formée par l'intervalle séparant deux points sur la même ligne et l'unité du déplacement en Y est constituée par l'intervalle séparant deux lignes dans la même trame. Quant aux gradients, ceux-ci sont calculés suivant la méthode connue décrite dans l'article IEEE Trans. on Com., vol. com.32, n°8 d'Août 1984 ayant pour titre "Movement compensated inter-trame prediction for NTSC color TV signals" et ayant pour auteur S. SABRI. Une représentation graphique de ces calculs est montrée à la figure 5 qui représente des déplacements dans l'image précédente IMS(t-1).

La luminance $I_B$ du point courant déplacée dans l'image précédente est obtenue par interpolation bilinéaire des luminances $I_n$ des points voisins, ce qui se traduit avec les notations de la figure 5 par la relation

$$I_B = I_5.(1-FD_x).(1-FD_y) + I_6.FD_x.(1-FD_y) + I_2.(1-FD_x).FD_y + I_1.FD_x.FD_y \quad (11)$$

Le gradient horizontal est :

$$I_x = (I_5-I_6 + I_2-I_1)/2 \quad (12)$$

Le gradient vertical est :

$$I_y = (I_5-I_2 + I_6-I_1)/2 \quad (13)$$

Si $FD_x = 0$ :

$$I_x = (I_4-I_6 + I_3-I_1)/4 \quad (14)$$

$$I_y = (I_5-I_2) \quad (15)$$

Si $FD_y = 0$

$$I_x = (I_5-I_6) \quad (16)$$

$$I_y = (I_7-I_1 + I_8-I_2)/4 \quad (17)$$

Si $FD_x = 0$ et $FD_y = 0$

$$I_x = (I_4-I_6 + I_3-I_1)/4 \quad (18)$$

$$I_y = (I_7-I_1 + I_8-I_2)/4 \quad (19)$$

Pour limiter les risques de divergence ou d'annulation des termes de correction ceux-ci sont majorés et minorés. On a

$$D_i^x = D_{i-1}^x - (\text{terme de correction})^x \quad (20)$$

$$D_i^y = D_{i-1}^y - (\text{terme de correction})^y \quad (21)$$

$$(\text{terme de correction})^x = DFD(z,D_{i-1}).grad_x\, I(z-D_{i-1},t-1). \quad (22)$$

$$(\text{terme de correction})^y = DFD(z,D_{i-1}).grad_y\, I(z-D_{i-1},t-1). \quad (23)$$

En calculant le gradient dans l'image précédente avec une précision maximale de 0.25 on obtient en vertu de la relation (3)

$$epsilon_{MAX} = 8 \quad (24)$$

En général, $FD_x$ et $FD_y$ sont différents de zéro, et la précision maximale sur le gradient est de 0.5. On obtient alors

$$epsilon_{MAX} = 2.$$

Suivant un mode possible de réalisation de l'invention des tests de limitation des termes de correction exprimés en unité de déplacement pourront être éventuellement définis de la façon suivante :

1. Si |(terme de correction)| < 1/16, alors le (terme de correction) sera pris égal à ±1/16
2. Si |(terme de correction)$^x$| > 3, alors le (terme de correction)$^x$ sera pris égal à ±3
3. Si |(terme de correction)$^y$| > 2, alors le (terme de correction)$^y$ sera pris égal à ±2

Egalement dans ce mode de réalisation on pourra prendre à titre d'exemple comme déplacement maximal en x, $^{x}_{MAX}$ = ±15 et comme déplacement maximal en y, $D^{y}_{MAX}$ = ±5.

Si le déplacement estimé dépasse l'une ou l'autre de ces valeurs il est remis à zéro.

Dans ces conditions la zone de recherche dans la trame IMS(t-1) pour un point courant P(z,t) est définie dans un rectangle de dimension 30×10 comme cela est représenté à la figure 6.

Les quatre estimations de déplacement sont menés en parallèle à partir des 4 valeurs initiales $D^A_0$, $D^B_0$, $D^C_0$ et $D^D_0$. Un point est considéré comme convergent, quand au moins une des 4 valeurs de déplacement $D^A_i$, $D^B_i$, $D^C_i$ et $D^D_i$ donne une valeur absolue de la différence inter-image déplacée $DFD(z,D_i)$ inférieure au seuil S défini précédemment pour un numéro d'itération i supérieur ou égal à zéro (i = 0 désignant une valeur initiale) et inférieur ou égal au numéro d'itération maximal $i_{MAX}$ ($0 < i < i_{MAX}$). Si aucune valeur de déplacement ne donne une valeur |DFD| inférieure ou égale à S, le point est considéré comme divergent, mais il lui est attribué malgré tout un déplacement, celui qui parmi $D^A_{iMAX}$, $D^B_{iMAX}$, $D^C_{iMAX}$, $D^D_{iMAX}$ donne la valeur absolue de DFD la plus faible.

Si le gradient de l'image courante est faible, le choix d'un déplacement se fait dans le voisinage causal du point courant P(z,t) et aucune itération n'est effectuée (i = 0). Le critère de décision consiste alors à choisir le déplacement qui parmi les valeurs $D^A_0$, $D^B_0$, $D^C_0$ et $D^D_0$ donne la valeur absolue de différence inter-image déplacée $DFD(z,D_0)$ la plus faible. En cas d'égalité, le choix est effectué dans l'ordre $D^A_0$, $D^B_0$, $D^C_0$ et $D^D_0$ (étapes 9 à 13 de la figure 7). Cependant, si la différence inter-image déplacée des déplacements choisis n'est pas inférieure ou égale au seuil S (étape 16) (seuil de test de convergence) le déplacement prend la valeur 0 (étape 17).

Si le gradient de l'image courante est élevé à chaque itération (de 0 à $i_{MAX}$), on obtient quatre valeurs de $|DFD(D_i)|$ qui sont comparées au seuil S.

Le déplacement retenu est le premier qui donne une |DFD| inférieure ou égale au seuil S. Si plusieurs déplacements sont obtenus à la même itération, celui qui donne la différence inter-image déplacée |DFD| la plus faible est choisi. En cas de nouvelle égalité sur |DFD|, un choix arbitraire est effectué dans l'ordre : $D^A_i$, $D^B_i$, $D^C_i$, $D^D_i$.

A chaque itération i ($0 \leqq i \leqq i_{MAX}$) est associé ainsi un déplacement $D_i$, une différence inter-image déplacée DFD et un nombre d'itération i.

La décision se prend alors sur le nombre d'itérations le plus faible, puis sur la différence inter-image déplacée DFD minimale, pour ensuite faire éventuellement un choix arbitraire.

Un exemple de réalisation d'un dispositif correspondant au procédé de l'invention est représenté à la figure 8. Il est constitué par un ensemble de mémoires ligne 18, une mémoire d'image 19, un dispositif de calcul du module du gradient courant 20, un dispositif d'aiguillage 21 ainsi que par des organes de décision 22 et 22 bis et d'estimation de déplacement 23. Le dispositif de calcul du module du gradient courant reçoit ses informations de l'ensemble des mémoires lignes 18 et fournit le résultat des calculs au dispositif d'estimation de déplacement 23 et au dispositif d'aiguillage 21. Le dispositif d'estimation de déplacement possède également deux entrées qui sont reliées d'une part, à la sortie de l'ensemble des mémoires ligne 18 et d'autre part, à la sortie de la mémoire d'images 19. La mémoire ligne 18 sert de tampon à la mémoire d'image 19 pour stocker les informations de rafraîchissement de la mémoire d'image 19 en attendant que les points analysés soient en dehors de la fenêtre d'exploration. Avec une fenêtre d'exploration occupant un espace de 10 lignes du type décrit à la figure 6, une mémoire ligne ayant une capacité de stockage de points correspondants à 5 lignes successives parait suffisante. Les calculs effectués ont lieu à la fréquence point, au rythme d'impulsions d'horloge $H_l$ et $H_k$ fournies par une horloge ligne non représentée. Le dispositif 20 détermine le numéro de la ligne courante l et en fonction de la parité du numéro de la ligne courante l il détermine le numéro de la colonne du point courant k. Disposant alors des coordonnées (k,l) du point courant le dispositif 20 calcule le module du gradient courant. Le dispositif d'aiguillage 21 compare le résultat du calcul fournit par le dispositif 20 à un seuil de référence Sg

et conformément à l'algorithme représenté à la figure 1 valide son entrée 1 ou 2. L'entrée 1 est choisie si $|\text{grad } I(z,t)| \leq S_g$ et l'entrée 2 est choisie si $|\text{grad } I(z,t)| > S_g$. Les organes de décision 22 et 22 bis ont les fonctionnalités décrites par l'organigramme de la figure 7, et peuvent être réalisées de façon connue, soit à l'aide d'une structure microprogrammée du type à microprocesseur, soit encore à l'aide d'une logique câblée composée de façon connue par des circuits comparateurs.

Le dispositif d'estimation de déplacement qui est représenté à la figure 9 est constitué par un bloc d'initialisation 24 constitué de registres 25 et 26 et par un ensemble de calcul 23 formé par les éléments 27 à 46. Ce dernier fournit les informations de déplacement $D_i^A$, $D_i^B$, $D_i^C$, $D_i^D$ à l'organe de décision 22. L'entrée 2 de du dispositif d'aiguillage 21, figure 8, est reliée à l'organe de décision 22. Le bloc de l'initialisation 24 permet d'initialiser l'algorithme de calcul de déplacement. Le bloc 24 comprend un premier registre 25 et un deuxième registre 26. Ces registres sont formés de deux parties distinctes, l'une pour mémoriser des mots binaires représentant le mode de déplacement en x ou en y appelés respectivement MDX et MDY et l'autre pour servir de mémoire tampon aux modes de déplacement MTDX et MTDY calculés par l'organe de décision 22.

En utilisant les notations précédentes on a

$$MDX = (FC\text{-}DC\text{-}2DX_{MAX} + 3) \text{ déplacements}$$

$$MDY = (FC\text{-}DC\text{-}2DX_{MAX} + 3) \text{ déplacements}$$

$$MTDX = 1 \text{ déplacement}$$

et

$$MTDY = 1 \text{ déplacement}$$

Au début de chaque trame d'images l'ensemble des mots MDX, MDY, MTDX et MTDY est remis à zéro. MTDX et MTDY sont utilisés en tant qu'intermédiaires avant d'écraser les mots MDX et MDY correspondant aux déplacements D(k-1, l-1) pour le passage à l'analyse du point suivant (k+1,l) tel que cela est représenté à la figure 10A. Il servent également d'intermédiaires avant d'écraser les mots MDX et MDY correspondant aux déplacements D(k+1,l-1) pour le passage à l'analyse du point suivant (k-1,l) tel que cela est représenté à la figure 10B.

Dans le cas de la figure 10A, quand k est égal à FC, le déplacement estimé D(FC,l) est mis automatiquement dans les mots (MTDX,MTDY) et en plus dans les mots de (MDX,MDY) correspondant aux déplacements D(FC,l) et D(FC+1,l).

Dans le cas de la figure 10B, quand k est égal à DC, le déplacement estimé D(DC,l) est mis automatiquement dans les mots (MTDX,MTDY) et en plus dans les mots de (MDX,MDY) correspondant aux déplacements D(DC,l) et D(DC-1,l).

Le dispositif de calcul des estimations de déplacement, composé des éléments 27 à 46, effectue quatre calculs de déplacements en parallèle à partir de quatre valeurs initiales $D_0^A$, $D_0^B$, $D_0^C$, $D_0^D$ contenues dans le bloc d'initialisation 24 lorsque le gradient spatial de l'image courante est supérieur au seuil Sg défini précédemment. Les informations $D_0^A$, $D_0^B$, $D_,^C$, $D_0^D$ sont appliquées respectivement sur des premières entrées des circuits aiguilleurs 27, 32, 37 et 42 dont les sorties sont reliées à des blocs de test de convergence et de calcul de termes de corrections notés respectivement (28,29), (33,34), (38,39) et (43,44). Les résultats des tests de convergence et le calcul des termes de correction sont appliqués sur des entrées de dispositifs d'aiguillage notés respectivement 30, 35, 40 et 45 qui les dirigent ensuite, soit sur des entrées respectives de l'organe de décision 22, soit sur des dispositifs de calcul de nouveaux déplacements, notés respectivement 31, 36, 41 et 46, lorsque la résolution de l'algorithme décrit précédemment diverge pour i inférieur à $i_{MAX}$. Les nouveaux déplacements fournis par les dispositifs de calculs 31, 36, 41 et 46 sont appliqués respectivement sur les deuxièmes entrées des dispositifs d'aiguillages 27, 32, 37 et 42.

Les détails de réalisation d'un bloc de test de convergence 28 associés à un bloc de calcul des termes de corrections 29 et à un bloc de calcul de nouveaux déplacements 31 sont représentés à la figure 11 à l'intérieur de lignes en pointillées.

Le bloc de test de convergence 28 comprend d'une part, un circuit d'interpolation 47 couplé à un dispositif 48 de calcul de valeur absolue de la différence inter-image déplacée $|DFD|$, ce dernier étant couplé à l'organe de décision 22 au travers des commutateurs 49, 50 et d'autre part, un dispositif 51 de calcul de gradient couplé à un dispositif 52 de calcul de la somme des carrés des gradients déplacés. Le circuit d'interpolation 47 constitué éventuellement par une mémoire morte programmable est également couplé à la mémoire d'images 19. Le bloc de calcul des termes de correction 29 comprend un dispositif de calcul 53 de la valeur epsilon décrite précédemment couplé à un dispositif de calcul d'incrément 54 et à un dispositif de calcul 55 de valeurs de correction, ainsi que des circuits comparateurs 56 et 57.

Le bloc de calcul de nouveaux déplacements 31 comprend des circuits soustracteurs 58 et 59 couplés tous deux à un circuit comparateur 60. Le couplage entre le bloc de test de convergence 28 et le bloc de calcul des

termes de correction 29 est réalisé comme sur la figure 9 par le commutateur 30. L'entrée du commutateur est couplée directement à la sortie du dispositif de calcul 52 et à la sortie du dispositif de calcul 48 au travers des commutateurs 49 et 50. D'autre part, comme sur la figure 9, le bloc d'initialisation 24 est couplé au bloc de test de convergence 28 par l'intermédiaire du commutateur 27. Ce commutateur relie le bloc d'initialisation 24 d'une part, à une première entrée du circuit d'interpolation 47 et d'autre part, à une première entrée du dispositif de calcul 51. La deuxième entrée du commutateur 27 est également couplée à la sortie du bloc de calcul du nouveau déplacement 31 qui est constitué par le circuit comparateur 60.

Le fonctionnement du dispositif d'estimation de déplacement est le suivant. Pour chacun des points courant de l'image, le commutateur 27 transmet une valeur initiale $D_0$, trouvée dans le registre 24, au circuit d'interpolation 47 et au dispositif de calcul de gradient 51. La valeur $D_0$ initialise l'estimation. Un calcul d'interpolation bilinéaire sur la valeur $D_0$ est effectué par le circuit d'interpolation 47 pour déterminer la luminance du point courant déplacé dans l'image précédente I(z-D0, t-1). La différence inter-image déplacée DFD(Z,D0) et sa valeur absolue sont calculées par le dispositif de calcul 48 à partir de l'information de luminance du point courant. Le commutateur 49 transmet la valeur calculée par le dispositif de calcul 48 à destination de l'organe de décision 22 lorsque la valeur obtenue est inférieure ou égale au seuil S précédemment défini. Le déplacement $D_0$ et la valeur absolue de la différence inter-image déplacée $|DFD(D_0)|$ sont appliqués aux entrées de l'organe de décision 22. Dans le cas contraire, le résultat fourni par le dispositif de calcul 48 est appliqué à l'entrée du commutateur 50 puis à celle de l'organe de décision 22 lorsque la valeur de l'itération i est égale à la valeur d'itération maximale $i_{MAX}$. Par contre, lorsque la valeur de l'itération i est inférieure à la valeur maximale, le résultat est appliqué aux entrées du bloc de calcul de correction 29 au travers du commutateur 30.

Au cours de ces calculs, qui sont effectués durant un temps t depuis l'instant t=0, les gradients déplacés $grad_x$ et $grad_y$ et le terme $G_2 = 2.(grad^2_x + grad^2_y)$ sont calculés.

Suivant la valeur de G2, le commutateur 30 dirige le résultat obtenu soit en direction de l'organe de décision 22 si la valeur de G2 obtenue est inférieure ou égale à une valeur de coefficient égale par exemple à 0,125, soit vers le bloc de calcul des termes de correction de nouveaux déplacements 29 et 31.

Le dispositif de calcul 53 calcule la valeur epsilon $=1/G_2$. La valeur de l'itération i est augmentée de une unité par le dispositif de calcul d'incrément 54 et est remis à zéro à l'analyse du point courant suivant. Le calcul des termes $(TC)^x$ et $(TC)^y$ de correction en X et Y est effectué par le circuit 55. Les valeurs $(TC)^x$ et $(TC)^y$ obtenues sur les sorties du dispositif de calcul 55 vérifie les relations

$$(TC)^x = DFD(z,D_i) \times grad_x(D_i) \times$$

et

$$(TC)^y = DFD(z,D_i) \times grad_y(D_i) \times$$

Les valeurs $(TC)^x$ et $(TC)^y$ obtenues sont appliquées respectivement aux entrées des comparateurs 56 et 57 pour être limités, à des conditions de signes près, à des valeurs maximales et minimales. Suivant un mode préféré de réalisation de l'invention les valeurs minimales de $(TC)^x$ et de $(TC)^y$ sont les mêmes et fixées à 1/16, par contre la valeur maximale de $(TC)^x$ est fixée égale à 3 et la valeur maximale de $(TC)^y$ est fixée égale à 2. Les termes $(TC)^x$ et $(TC)^y$ obtenus sont ajoutés aux valeurs de déplacement de $D^x_0$ et $D^y_0$ par les circuits 58 et 59 et les résultats obtenus $D^x_1$ et $D^y_1$ qui correspondent aux déplacements estimés sont à nouveau limités par le circuit comparateur 60 avant d'être appliqués sur la deuxième entrée du commutateur 27. A l'itération i suivante (i = 2) le commutateur 27 applique les déplacements estimés $D^x_1$ et $D^y_1$ aux circuits 47, 51, 58 ou 59.

En sortie de l'organe de décision 22 un déplacement est choisi pour le point courant et est écrit dans la mémoire tampon 24 MTDX et MTDY. i est remis à zéro et le commutateur 27 retourne sur sa position de départ et les calculs décrits précédemment sont recommencés pour estimer le déplacement du nouveau point courant.

Le procédé et le dispositif selon l'invention décrits précédemment présentent toutefois l'inconvénient de ne pouvoir être mis en oeuvre que pour les standards de télévision pour lesquels ils ont été conçus. Dans ces conditions les valeurs de luminance des pixels des trames manquantes d'une suite d'images représentant une même scène ne peuvent pas être prises en compte pour la détermination du mouvement des objets de la scène.

Une variante du procédé selon l'invention qui est décrit ci-après pallie cet inconvénient en permettant la détermination d'un champ de mouvement entre deux trames généralement successives d'une séquence d'images, sous la forme d'un champ de vecteurs attribué à une trame fictive située généralement entre deux trames mères. Le champ de mouvement est composé par un ensemble de vecteurs. Chaque vecteur passe par un pixel de la trame fictive et a ses extrémités sur les deux trames mères qui l'encadrent. Sur la figure 12, les trames mères sont désignées par leur instant de prise de vue Ta et Tb. La trame fictive est située à un instant $T_j$ intermédiaire entre les instants Ta et Tb. Le but est de fournir un vecteur déplacement à chaque pixel de la trame fictive considérée à l'instant $T_j$, la luminance de chaque pixel étant inconnue a priori, à partir du champ de luminance des trames des instants Ta et Tb. Suivant un autre mode réalisation il sera également possible

de considérer que l'instant $T_j$ peut ainsi être situé en dehors de l'intervalle (Ta, Tb).

Le procédé selon l'invention est similaire au procédé décrit précédemment à la différence cependant qu'il permet d'estimer le mouvement entre deux trames d'instants Ta ou Tb pour les pixels de la trame fictive Tj. Les complexités de l'algorithme et celle du dispositif d'estimation qui en découle, sont du même ordre.

L'estimation de mouvement est calculée à partir de la luminance L() des pixels des trames d'instants Ta et Tb. Le mouvement estimé pour chaque pixel se présente sous la forme d'un vecteur D à deux composantes horizontale DX et verticale DY.

D désigne le déplacement entre Ta et Tb du pixel P de coordonnées (Z, Tj) dans la trame fictive Tj. Z représente le couple des coordonnées horizontale IX et verticale IY du pixel dans la trame fictive Tj. Dans ce cadre le vecteur déplacement D passe par le point (Z, Tj) et a ses extrémités sur Ta et Tb alors que précédemment le vecteur déplacement D(Z, Tb) correspond au déplacement du pixel de coordonnée (Z, Tb) entre Ta et Tb. Cette différence a des conséquences sur la définition de l'équation (1) décrite précédemment. Cette équation devient :

$$Di(Z,Tj) = Di\text{-}1(Z,Tj)\text{-}TC \quad (24)$$

avec

$$TC = (DFD(Z,Di\text{-}1).grad\ L(Z,Di\text{-}1))/2.(grad\ L(Z,DI\text{-}1))^2$$

dans laquelle :

Z est un vecteur qui désigne les coordonnées du point courant P(Z,Tj) pour lequel est estimé le vecteur mouvement D(Z,Tj)),

Di(Z,Tj) est le vecteur déplacement estimé au point P(Z,Tj) à l'itération i,

DFD(Z,Di-1) désigne la différence temporelle en luminance dans la direction du déplacement Di-1, elle est encore appelée "différence intertrames déplacées" et est calculée entre Ta et Tb suivant la relation :

$$DFD(Z,Di\text{-}1) = L(B,Tb) - L(A, Ta)$$

avec

$$B = Z + ((Tb - Tj)/(Tb - Ta))xDi\text{-}1$$
$$A = Z - ((Tj - Ta)/(Tb - Ta))xDi\text{-}1$$

grad L(Z, Di-1) est un vecteur qui désigne le gradient spatial, demi-somme des gradients spatiaux aux extrémités de Di-1, sur Ta et Tb ; sa valeur est définie par

$$2\ grad\ L(Z, Di\text{-}1) = grad\ L(A, Ta) + grad\ L(B, Tb)$$

Comparée à l'équation (1), l'équation (24) ci-dessus est peu différente ; elle diffère cependant dans le calcul des fonctions DFD et grad L, du fait que le vecteur mouvement pivote autour du pixel (Z, Tj) et qu'en conséquence ses extrémités sur les trames d'instants Ta et Tb varient, alors que le vecteur pivotait par une extrémité autour du pixel P (Z, Tb) et avait son autre extrémité libre sur la trame d'instant Ta. Il en résulte que les avantages conférés par l'estimateur sont conservés. De même, en ce qui concerne le cadre d'utilisation de l'équation de base, les stratégies qui ont encore un sens dans le présent estimateur sont conservées. Il s'agit notamment de :

– l'estimation du vecteur mouvement pour le point courant suivant les récurrences examinées parallèlement calculées à partir de 4 vecteurs d'initialisation qui sont les vecteurs mouvement estimés de 4 points voisins du point courant dans le voisinage causal,

– l'alternance du sens de balayage de la ligne dans la trame courante, (trame Tj dans le cadre de la présente invention;

– l'organe de décision à propos du choix d'un déplacement parmi 4 déplacements estimés.

Cependant, la procédure qui consiste à comparer le gradient de la luminance du point courant à un seuil, et à distinguer deux procédures selon que ce gradient est plus grand (strictement) ou plus petit que ce seuil est supprimée. En effet, cette distinction n'a plus de sens du fait que la luminance de la trame courante Tj est inconnue. Tous les points de la trame fictive Tj suivent donc dans ces conditions la même procédure d'estimation du vecteur mouvement, suivant quatre récurrences calculées parallèlement.

D'autre part, à la différence du procédé précédent, l'estimation est calculée entre deux trames Ta et Tb qui peuvent être de même parité ou de parité différente, et pour une trame Tj qui peut être également paire ou impaire. Un vecteur correcteur, désignée par dZa ou dZb, est introduit dans le calcul des fonctions DFD et grad L. dZa dépend de la parité relative de Ta et Tj, dZb dépend de la parité relative de Tb et Tj.

Les fonctions DFD et grad L deviennent :

$$DFD = L(B + dZb, Tb) - L(A + dZa, Ta) \quad (25)$$

$$2xgrad\ L(Z,Di\text{-}1) = grad\ L(B + dZb,Tb)\text{-}grad\ L(A + dZa,Ta) \quad (26)$$

Dans le cas où la trame Tj considérée est située en dehors de l'intervalle (Ta, Tb), les différentes équations présentées ci-dessus restent inchangées. Dans ce cas, le support du vecteur D(Z, Tj) passe par le point P=(Z,Tj) et celui-ci mesure encore le déplacement relatif entre les trames d'instants Ta et Tb.

Pour estimer le mouvement, le procédé selon l'invention utilise les différences intertrames existantes entre deux trames d'instants Ta et Tb qui se suivent directement ou non dans une séquence d'images. Dans la description qui suit, il est supposé que le déplacement de chaque pixel de la trame fictive d'instant Tj est rectiligne entre deux trames d'instants Ta et Tb, et chaque élément d'objet de la trame fictive d'instant Tj (luminance de pixel) est supposé également présent dans les trames d'instants Ta et Tb.

Le procédé se déroule suivant plusieurs étapes dont une représentation est donnée schématiquement sur l'organigramme de la figure 13.

Selon une première étape, représentée en 61 à la figure 13, chaque point de la trame courante est considéré, par un balayage en lignes de tous les points de la trame. Le procédé exécute les traitements indiqués à l'étape 62 pour estimer quatre valeurs de déplacement à partir de quatre valeurs initiales de déplacement dans le voisinage causal du point courant. A la fin de l'exécution de l'étape 62, le procédé passe à l'exécution de l'étape 63 et fait le choix d'un déplacement parmi les quatre déplacements qui ont été estimés à l'étape 62. Le procédé se déroule ainsi par itérations successives, chaque fin d'exécution de l'étape 63 provoquant l'initialisation du point suivant (étape 64) et les déplacements sont enregistrés à l'étape 65.

Le déplacement entre les trames d'instants Ta et Tb est limité à des valeurs ± DX max en déplacement horizontal et ± DY max en déplacement vertical. Cela signifie que les extrémités de chaque vecteur mouvement, passant par chaque pixel P(Z, Tj) de la trame courante sont situées sur les trames d'instants Ta et Tb à l'intérieur d'un rectangle centré respectivement sur les pixels (Z, Ta) et (Z, Tb) et de dimensions respectives 2x((Tj-Ta)/(Tb-Ta)) × (DXmax, DYmax) et 2x((Tb-Tj)/(Tb-Ta)) × (DXmax, DYmax), ces dernières dépendant respectivement de la distance Tj à Ta et Tj à Tb, relativement à celle des instants Ta et Tb.

Pour éviter que le rectangle ne sorte du cadre des trames des instants Ta et Tb, l'ensemble des points sur la trame Tj pour lesquels un vecteur déplacement est estimé, est compris à l'intérieur d'un autre rectangle dont le centre coïncide avec le centre de la trame et dont les dimensions sont plus faibles que les dimensions de la trame de DX max + 2 colonnes et DY max + 2 lignes (+2 est imposé par le calcul du gradient spatial).

A ce stade si un vecteur déplacement est estimé pour tous les pixels de la trame fictive Tj, y compris les bords, un test peut être ajouté pour vérifier que les extrémités du vecteur sont effectivement situées sur les trames d'instants Ta et Tb. Si ce n'est pas le cas, il est aisé de modifier ce vecteur de façon à avoir pour le pixel courant un nouveau vecteur, le plus proche de l'ancien, qui a ses extrémités sur les trames d'instants Ta et Tb, de façon à pouvoir estimer les fonctions DFD et grad L.

Les déplacements qui sont estimés dans le plus proche voisinage causal du point courant servent à initialiser l'algorithme d'estimation de mouvement. Ce voisinage causal contient quatre déplacements qui sont utilisés pour initialiser quatre estimations de mouvement en parallèle.

Conformément au procédé décrit précédemment, le sens de balayage est inversé une ligne sur deux de façon alternée. Une représentation de ce balayage en lignes paires et impaires alternées est représentée à la figure 14A, et les pixels A, B, C, D dont les vecteurs déplacements $D_0^A$, $D_0^B$, $D_0^C$ et $D_0^D$ sont les vecteurs déplacements initiaux de Z, pour les lignes impaires et paires, sont représentées respectivement aux figures 14B et 14C.

Pour effectuer l'interpolation et le calcul des gradients dans la trame précédente, chaque déplacement D = (DX, DY) est décomposé suivant ses deux composantes DX et DY suivant les relations :

$$DX = IDX + FDX \text{ et } DY = IDY + FDY$$

où ID et FD désignent respectivement les parties entières et décimales du déplacement.

L'unité du déplacement en X est formée par l'intervalle séparant deux points sur la même ligne et l'unité du déplacement en Y est constituée par l'intervalle séparant deux lignes de la même trame.

Les gradients sont calculés de la façon décrite ci-dessous, et illustrée sur la figure 15 qui représente une portion de la trame d'instant Ta, et un vecteur déplacement dont l'extrémité sur la trame d'instant Ta a pour coordonnées (Z-DA, Ta) et a pour luminance LA. La luminance LB de son extrémité dans la trame d'instant Tb, et le vecteur déplacement DB en ce point sont calculés de la même façon.

Dans ce cas les vecteurs déplacements DA et DB vérifient les relations :

$$DA = ((Tj - Ta)/(Tb - Ta)) x D$$

$$DB = ((Tb - Tj)/(Tb - Ta)) x D$$

Les vecteurs DA et DB étant collinéaires et tels que

$$D = DA + DB.$$

La luminance LA du point courant déplacé dans la trame d'instant Ta est obtenue par interpolation bilinéaire des luminances Ln des pixels voisins, ce qui se traduit avec les notations de la figure 15 par la relation :

$$LA = I_9.(1-FDX).(1-FDY) + I_8.FDX.(1-FDY) + I_4(1-FDX).FDY + I_5.FDX.FDY$$

Le gradient spatial de luminance G en ce point dont les composantes sont notées GX et GY, est calculé de la façon suivante :

Si FDX est inférieure à 0,2 et si FDY est inférieure à 0,2 alors

$$GX = (I_{10}-I_8)/2$$

ou si FDY est supérieure à 0,8 alors

$$GX = (I_3-I_5)/2$$

$$GY = (I_9-I_2)/2$$

ou est compris entre 0,2 et 0,8 alors

$$GX = (I_{10}-I_8 + I_3-I_5)/4$$

$$GY = (I_9-I_4)$$

Si FDX est supérieur à 0,8 et si FDY est inférieure à 0,2 alors

$$GX = (I_9-I_7)/2$$

$$GY = (I_{12}-I_5)/2$$

ou si FDY est supérieure à 0,8 alors

$$GX = (I_4-I_6)/2$$

$$GY = (I_8-I_1)/2$$

ou si FDY est compris entre 0,2 et 0,8 alors

$$GX = (I_9-I_7 + I_4-I_6)/4$$

$$GY = (I_8-I_5)$$

enfin si FDX est compris entre 0,2 et 0,8 et si FDY est inférieure à 0,2 alors

$$GX = (I_9-I_8)$$

$$GY = (I_{11}-I_4 + I_{12}-I_5)/4$$

ou si FDY est supérieure à 0,8 alors

$$GX = (I_4-I_5)$$

$$GY = (I_9-I_2 + I_8-I_1)/4$$

ou si FDY est compris entre 0,2 et 0,8 alors

$$GX = (I_4-I_5 + I_9-I_8)/2$$

$$GY = (I_9-I_4 + I_8-I_5)/2$$

Une fois déterminées les luminances LA et LB des extrémités du vecteur D sur les trames d'instants Ta et Tb, la différence intertrames déplacées est calculée par la relation :

$$DFD\ (Z,D) = LB - LA$$

De même une fois que les gradients spatiaux GA et GB sont déterminés aux extrémités du vecteur D sur les trames Ta et Tb, le gradient grad L (Z,D) de l'équation récursive (1) est calculé par la relation :

$$2 \times \text{grad}\ L(Z, D) = GA + GB$$

Comme dans le procédé précédent les risques de divergence ou d'annulation des termes de correction peuvent être limités en majorant et minorant ces derniers, de sorte que,

$$D_i^x = D_{i-1}^x - (\text{terme de correction en x})$$

$$D_i^y = {}_{i-1}^{y} - (\text{terme de correction en Y})$$

avec

$$(\text{terme de correction en X}) = DFD(Z,Di\text{-}1)x\text{grad}_x(Z,Di\text{-}1)x\ \text{epsilon}$$

et

$$(\text{terme de correction en y}) = DFD(Z,Di\text{-}1)x\text{grad}_y(Z,Di\text{-}1)x\ \text{epsilon}$$

avec

$$\text{epsilon} = 1/2x(\text{grad}\ L(Z, D_{i-1}))^2 \quad (27)$$

et

$$\text{grad}L(Z,Di\text{-}1)^2 = \text{grad}^2{}_xL(Z,Di\text{-}1) + \text{grad}^2{}_YL(Z,Di\text{-}1)$$

avec la condition que si $(\text{grad}\ L(Z,Di\text{-}1))^2 = 0$

alors epsilon a pour valeur zéro.

En général FDX et FDY sont différents de zéro, et la précision maximale sur le gradient est de 0,5.

Comme dans le cas des tests de limitation des termes de corrections exprimés en unité de déplacement peuvent être définis de la façon suivante :

1. Si la valeur absolue de (terme de correction) est inférieure à 1/16, alors le (terme de correction) sera pris égal à ±1/16.
2. Si la valeur absolue de (terme de correction en x) est supérieur à 3, alors le terme de correction en x sera pris égal à ±3
3. Si la valeur absolue de (terme de correction en y) est supérieur à 2, alors le terme de correction en y sera pris égal à ±2

On pourra également prendre à titre d'exemple, dans le cas de 2 trames successives, un déplacement maximal en x : Dx max = ±8 colonnes, et un déplacement maximal en y : DY max = ±4 lignes.

Si le déplacement estimé dépasse l'une ou l'autre de ces valeurs, il est remis à zéro.

Le déplacement maximal Dmax entre les trames d'instants Ta et Tb peut être décomposé en DA max et DB max vecteurs colinéaires dont les extrémités sont respectivement sur les trames d'instants Ta et Tj pour DA max, les trames d'instants Tb et Tj pour DB max, tels que D max = DA max + DB max. Dmax étant fixé, DA max et DB max dépendent de la distance de la trame d'instant Tj aux trames d'instants Ta et Tb. La zone de recherche dans les trames d'instants Ta et Tb pour un point courant P(Z, Tj) est alors définie par un rectangle sur chaque trame Ta et Tb de dimensions respectives :

DXmax x((Tj-Ta)/(Tb-Ta)), DYmax x((Tj-Ta)/(Tb-Ta))

et

DXmax x((Tb-Tj)/(Tb-Ta)), DYmax x((Tb-Tj)/(Tb-Ta))

Conformément au procédé précédent, les quatre estimations de déplacement sont menées en parallèle à partir des 4 valeurs initiales $D_0^A$ $D_0^B$, $D_0^C$ et $D_0^D$. Un point est considéré comme convergent, quand au moins une des 4 valeurs de déplacement $D_i^A$, $D_i^B$, $D_i^C$, et $D_i^D$ donne une valeur absolue de la différence intertrames déplacée DFD(Z,Di) inférieure à un seuil S prédéfini, pour un numéro d'itération i supérieur ou égal à zéro (i=0 désignant une valeur initiale) et inférieur ou égal au numéro d'itération maximal i max. Si aucune valeur de déplacement ne donne une valeur DFD inférieure ou égale à S, le point est considéré comme divergent, mais il lui est attribué malgré tout un déplacement, celui qui parmi $D_{iMAX}^A$, $D_{iMAX}^B$, $D_{iMAX}^C$, $D_{iMAX}^D$ donne la valeur absolue de la différence interimage déplacée DFD la plus faible.

A chaque itération (de 0 à i max), le procédé donne quatre valeurs de DFD(Di) qui sont comparées au seuil S.

Le déplacement retenu est le premier qui donne la valeur DFD inférieure ou égale au seuil S. Si plusieurs déplacements sont obtenus à la même itération, celui qui donne la différence intertrames déplacées DFD la plus faible est choisi. En cas de nouvelle égalité sur la valeur DFD, un choix arbitraire est effectué dans l'ordre : $D_i^A$, $D_i^B$, $D_i^C$, et $D_i^D$.

A chaque itération i depuis la valeur i=0 jusqu'à une valeur imax sont associés ainsi un déplacement Di, une différence intertrames déplacées DFD et un nombre d'itération i.

La décision est prise sur le nombre d'itérations le plus faible, puis sur la différence intertrames déplacées DFD minimale, puis ensuite selon éventuellement un choix arbitraire.

Les modifications à apporter au dispositif décrit aux figures 8, 9 et 11 sont représentées sur les figures 17, 18 et 20, les éléments similaires dans ces figures portant les mêmes références.

Le dispositif représenté à la figure 17 comprend de façon similaire à celui de la figure 8, un ensemble de mémoires lignes 18, une mémoire de trame 19, un dispositif de détermination du sens de balayage 20, ainsi que des organes d'estimation de déplacement 23, de décision 22 et d'initialisation des vecteurs mouvement 24. Le dispositif d'estimation de déplacement possède deux entrées qui sont reliées d'une part, à la sortie de la mémoire de trame 19, d'autre part, à la sortie de la mémoire ligne 18. Chacune des mémoires lignes 18 sert de tampon à la mémoire de trame 19 pour stocker les informations de rafraichissement de la mémoire de trame 19 en attendant que les points analysés soient en dehors de la fenêtre d'exploration. A titre indicatif avec une fenêtre d'exploration du type de celle qui est représentée à la figure 16 et occupant par exemple un espace de 8 lignes, une mémoire ligne ayant une capacité de stockage de points correspondant à 10 lignes successives apparaît tout à fait suffisante. Les calculs effectués ont lieu à la fréquence point, au rythme d'impulsions d'horloge H1 à Hk fournies par une horloge ligne non représentée. Le dispositif de détermination du sens de balayage 20 détermine le numéro de la ligne courante l et en fonction de sa partié il détermine le numéro de la colonne du point courant k, pour disposer ainsi des coordonnées (k,1) du point courant. L'organe de décision 22 a les fonctionnalités décrites sur la figure 18, et peut être réalisé de façon connue, soit à l'aide d'une structure microprogrammée du type à microprocesseur, soit encore à l'aide d'une logique câblée obtenue de façon connue au moyen de circuits comparateurs.

Le dispositif d'estimation de déplacement qui est représenté à la figure 18 est formé de façon similaire à celui de la figure 9 par un bloc d'initialisation 24 constitué de registres 25 et 26 et par un ensemble de calcul 23 formé des éléments 27 à 46. L'ensemble de calcul 23 fournit les informations de déplacement $D_i^A$, $D_i^B$, $D_i^C$, et $D_i^D$ à l'organe de décision 22. Le bloc d'initialisation 24 assure l'initialisation de l'algorithme de calcul de déplacement. Le bloc d'initialisation 24 comprend un premier registre 25 et un deuxième registre 26. Ces registres sont formés de deux parties distinctes, l'une représentant le mode de déplacement en x ou en y appelés respectivement MDX et MDY et l'autre pour servir de mémoire tampon aux modes de déplacement MTDX et MTDY calculés par l'organe de décision 22.

Si NC désigne le nombre de pixels pour lesquels un mouvement est estimé à chaque ligne, on a :

MDX = (NC + 2) déplacements

MDY = (NC + 2) déplacements
MTDX = 1 déplacement
MTDY = 1 déplacement

Au début, de chaque trame d'images l'ensemble des mots MDX, MDY, MTDY et MTDX est remis à zéro. MTDX et MTDY sont utilisés en tant qu'intermédiaires avant d'écraser les mots MDX et MDY contenus dans les registres 25 et 26 correspondant aux déplacements D(k-1, 1-1) pour le passage à l'analyse du point suivant (k+1, 1) tel que cela est représenté à la figure 19A. Ils servent également d'intermédiaires avant d'écraser les mots MDX et MDY contenus dans les registres 25 et 26 correspondant aux déplacements (Dk+1, l-1) pour le passage à l'analyse du point suivant (k-1, l) tel que cela est représenté à la figure 19B.

Dans le cas de la figure 19A, quand k est égal à FC, dernier pixel de la ligne à avoir un mouvement estimé, le déplacement estimé D(FC,1) est placé dans les mots (MDX, MDY) correspondant au déplacement D(FC,1). Simultanément un nouveau déplacement est calculé de la façon suivante :

D(FC + 1,L + 1) = (D(FC,L) + D(FC-1,L) + D(FC-2,L) + D(FC-3,L))/4.

Ce déplacement est inscrit dans les mots (MTDX, MTDY). Il constitue le déplacement initial $D_0^A$ du prochain déplacement à estimer : D(FC, L+1).

De même, dans le cas de la figure 19B, quand k est égal à DC, dernier pixel de la ligne à avoir un mouvement estimé, le déplacement correspondant D(DC,L) est inscrit dans les mots (MDX, MDY) correspondant au déplacement D(FC,L). Simultanément, un nouveau déplacement est calculé de la façon suivante :

D(DC-1,L + 1) = D(DC,L) + D(DC + 1,L) + D(DC + 2,L) + D(DC + 3,L))/4

Ce déplacement est inscrit dans les mots (MTDX, MTDY). Il constitue le déplacement initial $D_0^A$ du prochain déplacement à estimer : D(DC,L+1).

Comme dans le cas du dispositif de la figure 7 le dispositif de calcul des estimations de déplacement de la figure 18, composé des éléments 27 à 46, effectue quatre calculs de déplacement en parallèle à partir de quatre valeurs initiales $D_0^A$ $D_0^B$, $D_0^C$ et $D_0^D$contenues dans le bloc d'initialisation 24. Les quatre valeurs initiales sont appliquées respectivement sur des premières entrées de circuits aiguilleurs 27, 32, 37 et 42 dont les sorties sont reliées à des blocs de test de convergence et de calcul de termes de corrections notés respectivement (28, 29), (33, 34), (38, 39) et (43, 44). Les résultats des tests de convergence et le calcul des termes de correction sont appliqués sur des entrées de dispositifs d'aiguillage notés respectivement 30, 35, 40 et 45 qui les dirigent ensuite, soit sur des entrées respectives de l'organe de décision 22, soit sur des dispositifs de calcul de nouveaux déplacements, notés respectivement 31, 36, 41 et 46, lorsque, la résolution de l'algorithme décrit précédemment diverge pour i inférieur à i max. Les nouveaux déplacements fournis par les dispositifs de calculs 31, 36, 41 et 46 sont appliqués respectivement sur les deuxièmes entrées des dispositifs d'aiguillages, 27, 32, 37 et 42.

Les détails de réalisation d'un bloc de test de convergence 28 associés à un bloc de calcul des termes de correction 29 et à un bloc de calcul de nouveaux déplacements 31 sont représentés à la figure 20 à l'intérieur de lignes en pointillées.

Contrairement au dispositif de la figure 11, le bloc de test de convergence 28 de la figure 20 comprend d'une part, deux circuits d'interpolation 47 et 47 bis, couplés à un dispositif 48 de calcul de valeur absolue de la différence intertrames déplacées DFD, ce dernier étant couplé à l'organe de décision 22 au travers de commutateurs 49, 50 ; et d'autre part, deux dispositifs 51 et 51 bis de calcul de gradient couplés à un dispositif 52 de calcul des gradients moyens déplacés lui-même étant couplé à un dispositif 52 bis de calcul de la somme des carrés des gradients moyens déplacés. Le circuit d'interpolation 47, constitué éventuellement par une mémoire morte programmable, est également couplé à la mémoire de trame 19. Le circuit d'interpolation 47 bis, également constitué éventuellement par une mémoire morte programmable est couplé à la mémoire lignes 18. Le bloc de calcul des termes de correction 29 comprend un dispositif de calcul 53 de la valeur de correction epsilon décrite précédemment couplé à un dispositif de calcul d'incrément 54 et à un dispositif de calcul 55 de valeurs de correction, ainsi que des circuits comparateurs 56 et 57.

Le bloc de calcul de nouveaux déplacements 31 comprend des circuits soustracteurs 58 et 59 couplés tous deux à un circuit comparateur 60. Le couplage entre le bloc de test de convergence 28 et le bloc de calcul des termes de correction 29 est réalisé comme sur la figure 18 par le commutateur 30. L'entrée du commutateur est couplée directement à la sortie du dispositif de calcul 52 et à la sortie du dispositif de calcul 48 au travers des commutateurs 40 et 50. D'autre part, comme sur la figure 18, le bloc d'initialisation 24 est couplé au bloc de test de convergence 28 par l'intermédiaire du commutateur 27. Ce commutateur relie le bloc d'initialisation 24 d'une part, à une première entrée des circuits d'interpolation 47 et 47 bis et d'autre part, à une première entrée des dispositifs de calcul 51 et 51 bis. La deuxième entrée du commutateur 27 est également couplée à la sortie du bloc de calcul du nouveau déplacement 31 qui est constitué par le circuit comparateur 60.

Le fonctionnement du dispositif d'estimation de déplacement est le suivant. Pour chacun des points courants de l'image, le commutateur 27 transmet une valeur initiale de déplacement Do, trouvée dans le registre 24, à destination des circuits d'interpolation 47 et 47 bis et des dispositifs de calcul de gradient 51 et 51 bis. La valeur Do initialise l'estimation. Un calcul d'interpolation bilinéaire est effectué, d'une part, par le circuit d'interpolation 47 pour déterminer la luminance $L(Z-D_o x(Tj-Ta)/(Tb,Ta)$, du point courant (Z, Tj) déplacé dans la trame précédente d'instant Ta de la valeur Do x (Tj-Ta)/(Tb-Ta) et d'autre part, par le circuit d'interpolation 47 bis pour déterminer la luminance L(Z+Do(Tb-Tj)/(Tb-Ta),Tb) du même point courant déplacé cette fois dans la trame suivante Tb de la valeur Do x(Tb-Tj)/Tb-Ta).

La différence intertrames déplacées DFD(Z, Do) et sa valeur absolue sont calculées par le dispositif de calcul 48. Le commutateur 49 transmet la valeur calculée par le dispositif de calcul 48 à destination de l'organe de décision 22 lorsque la valeur obtenue est inférieure ou égale au seuil S précédemment défini. Le déplacement Do et la valeur absolue de la différence intertrame déplacée DFD(Do) sont appliqués aux entrées de l'organe de décision 22. Dans le cas contraire, le résultat fourni par le dispositif de calcul 48 est appliqué à l'entrée du commutateur 50 puis, à celle de l'organe de décision 22, lorsque la valeur de l'itération i est égale à la valeur d'itération maximale i max. Par contre, dans les autres cas lorsque la valeur de l'itération i est inférieure à la valeur maximale, le résultat fourni par le dispositif de calcul 48 est appliqué aux entrées du bloc de calcul de correction 29 au travers du commutateur 30.

Au cours de ces calculs qui sont effectués durant un temps T depuis l'instant t=0, les gradients au point courant déplacé dans chaque trame d'instants Ta et Tb (grad Xa, grad Ya) et (grad Xb, grad Yb) sont calculés parallèlement dans les dispositifs 51 et 51 bis. Puis des valeurs de gradients grad X et grad Y déterminées par les relations

$$2 \times \text{grad } X = \text{grad } Xa + \text{grad } Xb$$
$$2 \times \text{grad } Y = \text{grad } Ya + \text{grad } Yb$$

sont calculés par le dispositif 52. Le dispositif de calcul 52 bis calcule ensuite un terme de type $G2 = 2 \times(\text{grad}^2 X+\text{grad}^2 Y)$ conformément à la relation (28) précédente.

Les parités relatives des trames des instants Ta et Tj sont prises en compte dans les circuits 47 et 51 et les parités relatives des trames d'instants Tb et Tj sont prises en compte dans les circuits 47 bis et 51 bis.

Suivant la valeur de G2, le commutateur 30 dirige le résultat obtenu soit en direction de l'organe de décision 22 si la valeur G2 obtenue est inférieure ou égale à une valeur de coefficient égale par exemple à 0,125, soit vers le bloc de calcul des termes de correction de nouveaux déplacements 29 et 31.

Le dispositif de calcul 53 calcule la valeur epsilon = 1/G2 définie précédemment. La valeur de l'itération i est augmentée de une unité par le dispositif de calcul d'incrément 54 et est remis à zéro à l'analyse du point courant suivant. Le calcul des termes $(TC)^x$ et $(TC)^y$ de correction en X et Y est effectué par le circuit 55. Les valeurs $(TC)^x$ et $(TC)^y$ obtenues sur les sorties du dispositif de calcul 55 vérifient les relations

$$(TC)^x = DFD\ (z, Di) \times \text{grad}_x(Di) \times \text{epsilon}$$

et

$$(TC)^y = DFD\ (Z, DI) \times \text{grad}_y(Di) \times \text{epsilon}$$

Les valeurs $(TC)^x$ et $(TC)^y$ obtenues sont appliquées respectivement aux entrées des comparateurs 56 et 57 pour être limitées, à des conditions de signes près, à des valeurs maximales et minomales. Suivant un mode préféré de réalisation de l'invention les valeurs minimales de $(TC)^x$ et de $(TC)^y$ sont les mêmes et fixées à 1/16, par contre la valeur maximale de $(TC)^x$ est fixée à 3 et la valeur maximale de $(TC)^y$ est fixée égale à 2. Les termes $(TC)^x$ et $(TC)^y$ obtenus sont ajoutés aux valeurs de déplacement de $D_o^x$ et $D_o^y$ par les circuits 58 et 59 et les résultats obtenus $D_1^x$ et $D_1^y$ qui correspondent aux déplacements estimés sont à nouveau limités par le circuit comparateur 60 avant d'être appliqués sur la deuxième entrée du commutateur 27. A l'itération i suivante (i=2) le commutateur 27 applique les déplacements estimés $D_1^x$ et $D_1^y$ aux circuits 47, 47 bis, 51, 51 bis, 58 et 59.

En sortie de l'organe de décision 22 un déplacement est choisi pour le point courant et est écrit dans les zones MTDX et MTDY de la mémoire tampon 24. La valeur de l'itération i est remise à zéro, le commutateur 27 retourne sur sa position de départ et les calculs décrits précédemment sont recommencés pour estimer le déplacement du nouveau point courant.

## Revendications

1. Procédé d'estimation de mouvement dans une séquence d'images animées du type télévision où chaque image est formée par un nombre déterminé de points lumineux disposés aux croisements de lignes et de colonnes, du type dams lequel l'estimation de mouvement est obtenue par l'exécution d'un algorithme de gradient qui rend minimal l'écart quadratique des variations locales de luminance du point courant de l'image avec le point qui lui est homologue dans l'image précédente caractérisé en ce qu'il consiste à initialiser (7) l'exécution

de l'algorithme par des valeurs de déplacements estimées selon plusieurs directions à l'intérieur du proche voisinage causal du point courant et à propager chaque estimation dans le sens du balayage des lignes de l'image.

2. Procédé selon la revendication 1, caractérisé en ce que le sens du balayage est alterné une ligne sur deux.

3. Procédé selon les revendications 1 et 2, caractérisé en ce qu'il consiste à choisir (1) un sens de propagation de l'algorithme en fonction de la position dans l'image de la ligne à laquelle appartient le point courant, à calculer le module du gradient (2) du point courant pour le comparer à une valeur de seuil prédéterminée (3), à choisir (4) un déplacement pour le point courant dans le voisinage causal de ce point lorsque le module du gradient obtenu est inférieur à la valeur de seuil prédéterminée en retenant le déplacement qui donne la différence inter-image déplacée la plus faible où à estimer (5, 6) un nouveau déplacement lorsque le module du gradient obtenu est supérieur à la valeur de seuil prédéterminée.

4. Procédé selon la revendication 3, caractérisé en ce qu'il consiste lorsque le module du gradient obtenu est supérieur à la valeur de seuil prédéterminée, à effectuer un calcul d'estimation (4) simultané d'un nombre déterminé N de déplacements à partir de N valeurs de déplacement initiales et à retenir la valeur de déplacement $D_i$ ($0 < i < i_{MAX}$) qui donne une convergence avec la différence inter-image déplacée $|DFD(D_i)|$ la plus faible (6).

5. Dispositif pour la mise en oeuvre du procédé selon l'une quelconque des revendications (1 à 4 ; 13 à 20) caractérisé en ce qu'il comprend une mémoire d'image (19) pour mémoriser les valeurs de luminance d'un nombre déterminé de points de l'image entourant l'homologue P(z,t-1) du point courant P(z,t) dans la trame d'image $IMS_{(t-1)}$ précédant la trame du point courant $IMS_{(t)}$, un dispositif de calcul du module du gradient de luminance du point courant ( 20), un premier et un deuxième organe de décision (22 et 22 bis) et un dispositif de déplacement (23) couplé à la mémoire d'image (19) et au premier et deuxième organe de décision (22 et 22 bis) pour estimer des valeurs de déplacement selon plusieurs directions, les sorties des deux organes de décision (22 et 22 bis) étant couplées aux entrées d'un dispositif d'aiguillage (21) piloté par le dispositif de calcul du module du gradient courant ( 20 ), si la valeur du module du gradient courant est inférieure ou égale à une valeur de seuil prédéterminée le déplacement retenu est celui issu du deuxième organe de décision (22 bis) sinon le déplacement retenu est celui issu du premier organe de décision (22).

6. Dispositif selon la revendication 5, caractérisé en ce que le dispositif d'estimation de déplacement comprend un bloc d'initialisation (24) pour mémoriser des déplacements initiales suivant plusieurs directions couplé à un ensemble de calcul (27 - - - 46) pour calculer à partir des valeurs de déplacement initiales des valeurs de déplacement pour lesquelles l'algorithme du gradient converge.

7. Dispositif selon la revendication 6, caractérisé en ce que l'ensemble de calcul est couplé à l'organe de décision (22) pour sélectionner la valeur de déplacement que donne la convergence de l'algorithme la plus rapide.

8. Dispositif selon les revendications 6 et 7, caractérisé en ce que l'ensemble de calcul comprend pour chaque valeur de déplacement estimée $D_i$ ($0 \leqq i \leqq i_{MAX}$) un bloc de test de convergence ( 28, 33, 38, 43 ), couplé à un bloc de calcul de termes de correction (31, 36, 41, 46) et à un dispositif de calcul de nouveaux déplacements (31, 36, 41, 46).

9. Dispositif selon la revendication 8, caractérisé en ce que le bloc de test de convergence comprend d'une part, un circuit d'interpolation (47) couplé à un dispositif de calcul (48) de valeur absolue de la différence inter-image déplacée, et d'autre part, un dispositif (51) de calcul de gradient couplé à un dispositif (52) de calcul de la somme des carrés des gradients déplacés obtenus suivant les deux directions de balayage horizontale et verticale de l'image.

10. Dispositif selon les revendications 8 et 9, caractérisé en ce que le bloc de calcul des termes de correction (29) comprend un dispositif le calcul (53) du gain de l'algorithme du gradient couplé à un dispositif de calcul d'incrément (54) et de valeur de correction (55).

11. Dispositif selon l'une quelconque des revendications 8, 9 et 10, caractérisé en ce que le dispositif de calcul de nouveaux déplacements comprend des circuits soustracteurs (58, 59) pour calculer des valeurs de déplacement en fonction des termes de correction calculés par le bloc de calcul de termes de correction (31, 36, 41, 46).

12. Dispositif selon les revendications 10 et 11, caractérisé en ce que chaque terme de correction (TC) fourni par le bloc de calcul des termes de correction est égal au produit de la différence inter-image déplacée (DFD(Z,D) par la valeur de gradient du point déplacé P(Z-D,t-1) et par le gain de l'algorithme epsilon.

13. Procédé d'estimation de mouvement selon l'une quelconque des revendications 1 à 4, caractérisé en ce qu'il consiste à déterminer un champ de mouvement entre deux trames successives (Ta, Tb) d'une séquence d'images sous la forme d'un champ de vecteurs attribué à une trame d'image fictive (Tj) localisée à proximité des deux trames (Ta, Tb).

14.Procédé selon la revendication 13, caractérisé en ce que le sens du balayage des lignes de la trame fictive est alterné une ligne sur deux.

15. Procédé selon les revendications 13 et 14, caractérisé en ce qu'il consiste à estimer le mouvement de chaque pixel dans la trame fictive Tj sous la forme d'un vecteur mouvement D(Z,Tj) correspondant au déplacement du pixel P(Z,Tj) entre les trames d'instants Ta et Tb, ce vecteur passant par le point courant P(Z,Tj) et ayant respectivement ses extrémités sur les trames d'image d'instants Ta et Tb, l'estimation ayant lieu en effectuant un calcul par itération de vecteurs déplacement Di(Z,Tj) suivant un algorithme de gradient qui rend minimal l'écart quadratrique des variations locales de luminance du point courant dans la trame fictive d'instant Tj.

16. Procédé selon la revendication 15, caractérisé en ce que chaque déplacement Di(Z,Tj) d'une itération i est obtenu à partir du vecteur déplacement Di-1(Z,Tj) obtenu à l'itération i-1 précédente par la relation

$$Di(Z,Tj) = Di\text{-}I(Z,Tj)\text{-}(DFD(Z,Di\text{-}I), grad\ L(Z,Di\text{-}I))) .2(grad\ L(Z,Di\text{-}I))^2)^{-1}$$

où : Z désigne les coordonnées dans l'espace du point courant P(Z,Tj) pour lequel est estimé le vecteur mouvement D(Z,Tj)

– DFD (Z,Di-1) désigne la différence intertrames déplacées calculée entre les trames d'instants Ta et Tb

– et grad L(Z,Di-1) désigne le gradient spatial demi somme des gradients spatiaux aux extrémités du vecteur déplacement Di-1 sur les trames d'instants Ta et Tb.

17. Procédé selon la revendication 16, caractérisé en ce que l'estimation du vecteur mouvement D(Z,Tj) pour le point courant du pixel P(Z,Tj) est calculée à partir de quatre vecteurs déplacement d'initialisation correspondant aux vecteurs mouvement déjà estimés pour quatre points voisins dans le voisinage causal du point courant, les quatre vecteurs déplacement d'initialisation donnant lieu à quatre vecteurs mouvement estimés, seul le vecteur mouvement qui parmi les quatre estimés donne une convergence de halgorithme du gradient avec la différence intertrames la plus faible étant retenu.

18. Procédé selon l'une quelconque des revendications 16 et 17, caractérisé en ce que la différence intertrame déplacée DFD(Z,Di-1) est obtenue en effectuant la différence temporelle dans la direction du déplacement Di-1 des valeurs de luminance du point courant P(Z,Tj) déplacé dans les trames d'instants Ta et Tb.

19. Procédé selon la revendication 18, caractérisé en ce que les luminances LA et LB du point courant déplacé respectivement dans les trames d'instants Ta et Tb sont obtenues par interpolation bi-linéaire des valeurs de luminances In des 4 pixels entourant le point, extrémité du vecteur considéré, respectivement dans Ta et Tb.

20. Procédé selon l'une quelconque des revendications 15 à 19, caractérisé en ce que chaque vecteur déplacement Di est obtenu par soustraction du vecteur déplacement Di-1, calculé à l'itération précédante, d'un terme de correction égale au produit de la différence intertrame déplacée DFD(Z,Di-1) d'une part, par le gradient spatial de luminance grad L(Z,Di-1) et d'autre part de l'inverse de la demi-somme des gradients spatiaux aux extrémités du vecteur déplacement Di-1 sur les trames d'instants Ta et Tb.

21. Dispositif selon l'une quelconque des revendications 5 à 8, caractérisé en ce qu'il comprend : une mémoire lignes (18) couplée à une mémoire de trame (19) pour mémoriser respectivement les valeurs de luminance d'un nombre déterminé de points de l'image entourant les homologues du point courant P(Z,Tj) et des points l'entourant dans les trames d'instants Ta et Tb, un dispositif d'estimation de déplacement (23) couplé à la mémoire lignes (18) à la mémoire trame (19) pour estimer des valeurs déplacement selon plusieurs directions et à un organe de décision pour calculer, à partir des valeurs de luminances des points contenus dans la mémoire ligne et la mémoire de trame et à partir d'au moins une valeur de déplacement initiale contenue dans un bloc d'initialisation (24), un vecteur de déplacement pour chaque point courant P(Z,Tj) de l'image.

22. Dispositif selon la revendication 21, caractérisé en ce que le dispositif d'estimation de déplacement comprend au moins un bloc de test de convergence (28, 33, 38, 43) un bloc de calcul de terme de correction (29, 34, 39, 44) et un bloc de calcul de nouveau déplacement (31, 36, 41, 46).

23. Dispositif selon la revendication 22, caractérisé en ce qu'un bloc de test de convergence comprend, d'une part, un premier circuit d'interpolation (47) pour déterminer la luminance du point courant déplacé dans la trame d'instant Ta, un deuxième circuit d'interpolation (47 bis) pour déterminer la luminance du point courant déplacé dans la trame d'instant Tb, et un dispositif de calcul (48) couplé au premier et au deuxième circuit d'interpolation (47) et (47 bis) pour calculer en fonction des valeurs de luminance calculées par le premier (47) et le deuxième (47 bis) circuit d'interpolation la valeur absolue de la différence interimage déplacée, la sortie du dispositif de calcul (48) étant couplée à l'organe de décision (22) au travers d'un premier (43) et d'un deuxième (50) commutateur ; d'autre part, un premier et un deuxième dispositif (51, 51 bis) de calcul de gradient couplé à un troisième dispositif de calcul (52) de calcul de la moyenne de gradients formés par le premier et le deuxième dispositif de calcul, le troisième dispositif de calcul (52) étant couplé à un quatrième dispositif de calcul (52 bis) de la somme des carrés des gradients moyens déplacés.

24. Dispositif selon les revendications 22 et 23, caractérisé en ce qu'un bloc de calcul de termes de correction comprend un cinquième dispositif de calcul (53) d'une valeur "epsilon" égale à l'inverse divisée par deux

de la somme des carrés des gradients moyens déplacés fournis par le quatrième dispositif de calcul (52 bis) couplé au travers d'un dispositif de calcul d'incrément (54) à un dispositif de calcul de correction (55) couplé, d'une part, au troisième dispositif de calcul (52) et d'autre part, au deuxième commutateur (50) pour calculer des termes de correction en fonction de la valeur absolue de la différence interimage déplacées fournie par le dispositif de calcul (48) et de la valeur "epsilon", ainsi qu'au moins un circuit comparateur (56, 57) pour limiter la valeur des termes de correction obtenus du dispositif de calcul de correction (55 ).

25. Dispositif selon la revendication 24, caractérisé en ce qu'un bloc de calcul de nouveaux déplacements comprend des circuits soustracteurs (58, 59) pour soustraire les termes de correction à chaque nouvelle itération commandée par le dispositif de calcul d'incrément (54), de la valeur du déplacement calculée à l'itération précédente et rangée dans le bloc d'initialisation (24), pour obtenir les nouvelles valeurs de déplacement à chaque nouvelle itération et les ranger dans le bloc d'initialisation (23).

## Patentansprüche

1. Verfahren zur näherungsweisen Berechnung der Bewegung in einer Abfolge von bewegten Bildern vom Fernsehtyp, in dem jedes Bild von einer bestimmten Anzahl von in den Kreuzungspunkten von Zeilen und Spalten angeordneten Leuchtpunkten gebildet wird, wobei das Verfahren von einem Typ ist, in dem die näherungsweise Berechnung der Bewegung durch die Ausführung eines Gradienten-Algorithmus erhalten wird, der die quadratische Abweichung der lokalen Variationen der Luminanz des laufenden Punktes des Bildes bezüglich des Punktes minimiert, der zu diesem im vorhergehenden Bild homolog ist, dadurch gekennzeichnet, daß es die Initialisierung (7) der Ausführung des Algorithmus durch Verschiebungswerte, die in mehreren Richtungen innerhalb der nächsten kausalen Umgebung des laufenden Punktes näherungsweise berechnet werden, und die Fortschreitung einer jeden näherungsweisen Berechnung in der Bildzeilen-Abtastrichtung umfaßt.

2. Verfahren gemäß Anspruch 1, dadurch gekennzeichnet, daß die Abtastrichtung von einer Zeile zur nächsten abwechselt.

3. Verfahren gemäß den Ansprüchen 1 und 2, dadurch gekennzeichnet, daß es die Wahl (1) einer Fortschreitungsrichtung des Algorithmus in Abhängigkeit von der Position der Zeile im Bild, zu der der laufende Punkt gehört, die Berechnung des Gradientenbetrages (2) des laufenden Punktes, um diesen mit einem vorgegebenen Schwellenwert zu vergleichen (3), die Wahl (4) einer Verschiebung für den laufenden Punkt in der kausalen Umgebung dieses Punktes, wenn der erhaltene Gradientenbetrag unterhalb des vorgegebenen Schwellenwertes liegt, indem die Verschiebung, die die Verschiebungsdifferenz zwischen den Bildern minimiert, festgehalten wird, oder die näherungsweise Berechnung (5, 6) einer neuen Verschiebung umfaßt, wenn der erhaltene Gradientenbetrag über dem vorgegebenen Schwellenwert liegt.

4. Verfahren gemäß Anspruch 3, dadurch gekennzeichnet, daß es dann, wenn der Gradientenmodul über dem vorgegebenen Schwellenwert liegt, die Ausführung einer gleichzeitigen näherungsweisen Berechnung (4) einer bestimmten Anzahl N von Verschiebungen anhand von N anfänglichen Verschiebungswerten und das Festhalten des Verschiebungswertes $D_i(1<i<i_{MAX})$ umfaßt, der für die minimale Verschiebungsdifferenz zwischen den Bildern $|DFD(D_i)|$ eine Konvergenz ergibt (6).

5. Einrichtung für die Ausführung des Verfahrens gemäß einem der Ansprüche 1 bis 4 und 13 bis 20, dadurch gekennzeichnet, daß sie versehen ist mit einem Bildspeicher (19) zum Speichern der Luminanzwerte einer bestimmten Anzahl von Punkten des Bildes, die das Homolog P(z,t-1) des laufenden Punktes P(z,t) in dem dem Teilbild des laufenden Punktes $IMS_{(t)}$ vorhergehenden Teilbild $IMS_{(t-1)}$ umgeben, einer Einrichtung zum Berechnen des Gradientenbetrages der Luminanz des laufenden Punk!es (20), einem ersten und einem zweiten Entscheidungselement (22 und 22a) und einer Verschiebungseinrichtung (23), die mit dem Bildspeicher (19) und mit dem ersten und dem zweiten Entscheidungselement (22 und 22a) verbunden ist, um die Verschiebungswerte in mehreren Richtungen näherungsweise zu berechnen, wobei die Ausgänge der beiden Entscheidungselemente (22 und 22a) mit den Eingängen einer Verzweigungseinrichtung (21) verbunden sind, die von der Einrichtung zur Berechnung des laufenden Gradientenbetrages (20) gesteuert wird, wobei die festgehaltene Verschiebung die vom zweiten Entscheidungselement (22a) ausgegebene Verschiebung ist, wenn der laufende Wert des Gradientenbetrages kleiner oder gleich dem vorgegebenen Schwellenwert ist, und wobei andernfalls die festgehaltene Verschiebung die vom ersten Entscheidungselement (22) ausgegebene Verschiebung ist.

6. Einrichtung gemäß Anspruch 5, dadurch gekennzeichnet, daß die Einrichtung für die näherungsweise Berechnung der Verschiebung einen Initialisierungsblock (24) zum Speichern der anfänglichen Verschiebungen in mehreren Richtungen umfaßt, der mit einer Recheneinheit (27 --- 46) verbunden ist, die der Berechnung anhand der anfänglichen Verschiebungswerte derjenigen Verschiebungswerte dient, für die der Gradientenalgorithmus konvergiert.

7. Einrichtung gemäß Anspruch 6, dadurch gekennzeichnet, daß die Recheneinheit mit dem Entscheidungselement (22) verbunden ist, um den Verschiebungswert auszuwählen, der die schnellste Konvergenz des Algorithmus ergibt.

8. Einrichtung gemäß den Ansprüchen 6 und 7, dadurch gekennzeichnet, daß die Recheneinheit für jeden näherungsweise berechneten Verschiebungswert $D_i$ ($0 \leqq i \leqq i_{MAX}$) einen Konvergenztestbloct. (28, 33, 38, 43) umfaßt, der mit einem Block für die Berechnung von Korrekturtermen (31, 36, 41, 46) und mit einer Einrichtung für die berechnung von neuen Verschiebungen (31, 36, 41, 46) verbunden ist.

9. Einrichtung gemäß Anspruch 8, dadurch gekennzeichnet, daß der Konvergenztestblock einerseits eine Interpolationsschaltung (47), die mit einer Einrichtung für die Berechnung (48) des Absolutwertes der Verschiebungsdifferenz zwischen den Bildern verbunden ist, und andererseits eine Einrichtung für die Berechnung (51) des Gradienten umfaßt, die gekoppelt ist mit einer Einrichtung für die Berechnung (52) der Summe der Quadrate der verschobenen Gradienten, die in den zwei Richtungen der horizontalen und der vertikalen Abtastung des Bildes erhalten werden.

10. Einrichtung gemäß den Ansprüchen 8 und 9, dadurch gekennzeichnet, daß der Block für die Berechnung der Korrekturterme (29) eine Einrichtung für die Berechnung (53) des Verstärkungsfaktors des Gradientenalgorithmus umfaßt, die mit einer Einrichtung für die Berechnung des Inkrements (54) und des Korrekturwertes (55) verbunden ist.

11. Einrichtung gemäß einem der Ansprüche 8, 9 und 10, dadurch gekennzeichnet, daß die Einrichtung für die Berechnung der neuen Verschiebungen Subtraktionsschaltungen (58, 59) umfaßt, um die Verschiebungswerte in Abhängigkeit von den vom Block für die Berechnung der Korrekturterme (31, 36, 41, 46) berechneten Korrekturtermen zu berechnen.

12. Einrichtung gemäß den Ansprüchen 10 und 11, dadurch gekennzeichnet, daß jeder vom Block für die Berechnung der Korrekturterme gelieferte Korrekturterm (TC) gleich dem Produkt der Verschiebungsdifferenz zwischen den Bildern (DFD(Z,D)) mit dem Wert des Gradienten des verschobenen Punktes P(Z-D,t-1) und mit dem Verstärkungsfaktor Epsilon des Algorithmus ist.

13. Verfahren für die näherungsweise Berechnung der Bewegung gemäß einem der Ansprüche 1 bis 4, dadurch gekennzeichnet, daß es die Bestimmung eines Bewegungsfeldes zwischen zwei aufeinanderfolgenden Teilbildern (Ta, Tb) einer Folge von Bildern in Form eines Vektorfeldes umfaßt, das einem in der Nähe der zwei Teilbilder (Ta, Tb) lokalisierten fiktiven Teilbild (Tj) zugeordnet wird.

14. Verfahren gemäß Anspruch 13, dadurch gekennzeichnet, daß die Abtastrichtung der Zeilen des fiktiven Teilbildes von einer Zeile zur nächsten gewechselt wird.

15. Verfahren gemäß den Ansprüchen 13 und 14, dadurch gekennzeichnet, daß es die näherungsweise Berechnung der Bewegung eines jeden Bildpunktes im fiktiven Teilbild Tj in Form einer Vektorbewegung D(Z,Tj) umfaßt, die der Verschiebung des Bildpunktes P(Z,Tj) zwischen den momentanen Teilbildern Ta, Tb entspricht, wobei dieser Vektor durch den laufenden Punkt P(Z,Tj) verläuft und seine jeweiligen Enden in den momentanen Teilbildern Ta, Tb liegen, wobei die näherungsweise Berechnung dadurch stattfindet, daß eine iterative Berechnung der Verschiebungsvektoren Di(Z,Tj) gemäß einem Gradientenalgorithmus aufgeführt wird, der die quadratische Abweichung der lokalen Variationen der Luminanz des laufenden Punktes im momentanen fiktiven Teilbild Tj miminiert.

16. Verfahren gemäß Anspruch 15, dadurch gekennzeichnet, daß jede Verschiebung Di(Z,Tj) einer i-ten Iteration aus dem Verschiebungsvektor Di-I(Z,Tj) erhalten wird, der aus der vorhergehenden (i-1)-ten Iteration über die Beziehung

$$Di(Z,Tj) = Di_1(Z,Tj)-(DFD(Z,Di-1).grad\ L(Z,Di-1))\cdot(2(grad\ L(Z,Di-1))^2)^{-1}$$

erhalten wird, wobei: Z die räumlichen Koordinaten des laufenden Punktes P(Z,Tj) bezeichnet, für den der Verschiebungsvektor D(Z,Tj) näherungsweise berechnet wird,

– DFD(Z,Di-1) die zwischen den momentanen Teilbildern Ta und Tb berechnete Verschiebungsdifferenz zwischen den Bildern bezeichnet,

– und grad L(Z,Di-1) den räumlichen Gradienten der gemittelten räumlichen Gradienten an den Enden des Verschiebungsvektors Di-1 in den momentanen Teilbildern Ta und Tb bezeichnet.

17. Verfahren gemäß Anspruch 16, dadurch gekennzeichnet, daß die näherungsweise Berechnung des Bewegungsvektors D(Z,Tj) für den laufenden Punkt des Bildpunktes P(Z,Tj) anhand von 4 anfänglichen Verschiebungsvektoren berechnet wird, die den bereits näherungsweise berechneten Verschiebungsvektoren für 4 benachbarte Punkte in der kausalen Umgebung des laufenden Punktes entsprechen, wobei die 4 anfänglichen Verschiebungsvektoren 4 näherungsweise berechnete Bewegungsvektoren ergeben, wobeinur derjenige Bewegungsvektor festgehalt wird, der unter den 4 näherungsweise berechneten eine Konvergenz des Gradientenalgorithmus für die minimale Verschiebungsdifferenz zwischen den Bildern ergibt.

18. Verfahren gemäß einem der Ansprüche 16 und 17, dadurch gekennzeichnet, daß die Verschiebungsdifferenz zwischen den Bildern DFD(Z,Di-1) dadurch erhalten wird, daß die zeitliche Differenz in der Verschiebungsrichtung Di-1 der Luminanzwerte des in den momentanen Teilbildern Ta und Tb verschobenen laufenden Punktes P(Z,Tj) ausgeführt wird.

19. Verfahren gemäß Anspruch 18, dadurch gekennzeichnet, daß die Luminanzen LA und LB des in den momentanen Teilbildern Ta bzw. Tb verschobenen laufenden Punktes durch eine bilineare Interpolation der Luminanzwerte In von 4 den Punkt umgebenden Bildpunkten erhalten werden, wobei sich die Enden des betrachteten Vektors in Ta bzw. Tb befinden.

20. Verfahren gemäß einem der Ansprüche 15 bis 19, dadurch gekennzeichnet, daß jeder Verschiebungsvektor $D_i$ dadurch erhalten wird, daß vom in der vorhergehenden Iteration berechneten Verschiebungsvektor Di-1 ein Korrekturterm subtrahiert wird, der gleich dem Produkt der Verschiebungsdifferenz zwischen den Bildern DFD(Z,Di-1) einerseits mit dem räumlichen Gradienten der Luminanz grad L(Z,Di-1) und andererseits mit dem Kehrwert der gemittelten räumlichen Gradienten an den Enden des Verschiebungsvektors Di-1 in den momentanen Teilbildern Ta und Tb ist.

21. Einrichtung gemäß einem der Ansprüche 5 bis 8, dadurch gekennzeichnet, daß sie umfaßt: einen Zeilenspeicher (18), der mit einem Teilbildspeicher (19) verbunden ist, um die Luminanzwerte einer bestimmten Anzahl von Punkten des Bildes, die die homologen Punkte des laufenden Punktes P(Z,Tj) umgeben, bzw. derjenigen Punkte, die diesen in den momentanen Teilbildern Ta und Tb umgeben, und eine Einrichtung für die näherungsweise Berechnung der Verschiebung (23), die verbunden ist mit dem mit dem Teilbildspeicher (19) verbundenen Zeilenspeicher (18), um Verschiebungswerte in mehreren Richtungen näherungsweise zu berechnen, und mit einem Entscheidungselement, um anhand von Luminanzwerten der im Zeilenspeicher und im Teilbildspeicher enthaltenen Punkte und anhand wenigstens eines anfänglichen Verschiebungswertes, der in einem Initialisierungsblock (24) enthalten ist, einen Verschiebungsvektor für jeden laufenden Punkt P(Z,Tj) des Bildes zu berechnen.

22. Einrichtung gemäß Anspruch 21, dadurch gekennzeichnet, daß die Einrichtung für die näherungsweise Berechnung der Verschiebung wenigstens einen Konvergenztestblock (28, 33, 38, 43), einen Block für die Berechnung des Korrekturterms (29, 34, 39, 44) und einen Block für die Berechnung einer neuen Verschiebung (31, 36, 41, 46) umfaßt.

23. Einrichtung gemäß Anspruch 22, dadurch gekennzeichnet, daß ein Konvergenztestblock versehen ist einerseits mit einer ersten Interpolationsschaltung (47) zum Bestimmen der Luminanz des im momentanen Bild Ta verschobenen laufenden Punktes, einer zweiten Interpolationsschaltung (47a) zum Bestimmen der Luminanz des im momentanen Teilbild Tb verschobenen laufenden Punktes und eine mit der ersten und mit der zweiten Interpolationsschaltung (47) und (47a) verbundene Recheneinrichtung (48) zum Berechnen des Absolutwertes der Verschiebungsdifferenz zwischen den Bildern in Abhängigkeit von den von der ersten (47) und von der zweiten (47a) Interpolationsschaltung berechneten Luminanzwerten, wobei der Ausgang der Recheneinrichtung (48) über eine erste (49) und über eine zweite (50) Umschalteinrichtung mit dem Entscheidungselement (22) verbunden ist; und andererseits mit einer ersten und einer zweiten Gradienten-Berechnungseinrichtung (51, 51a), die mit einer dritten Recheneinrichtung (52) verbunden ist, um den Mittelwert der von der ersten und von der zweiten Recheneinrichtung berechneten Gradienten zu berechnen, wobei die dritte Recheneinrichtung (52) mit einer vierten Recheneinrichtung (52a) für die Summe der quadrate der verschobenen mittleren Gradienten verbunden ist.

24. Einrichtung gemäß den Ansprüchen 22 und 23, dadurch gekennzeichnet, daß ein Block für die Berechnung der Korrekturterme versehen ist mit einer fünften Recheneinrichtung (53) für einen Wert "Epsilon", der gleich dem durch 2 dividierten Kehrwert der Summe der Quadrate der verschobenen mittleren Gradienten ist, die von der vierten Recheneinrichtung (52a) geliefert wird, wobei die fünfte Recheneinrichtung (53) über eine Inkrement-Berechnungseinrichtung (54) mit einer Korrektur-Recheneinrichtung (55) verbunden ist, die einerseits mit der dritten Recheneinrichtung (52) und andererseits mit der zweiten Umschalteinrichtung (50), um die Korrekturterme in Abhängigkeit vom von der Recheneinrichtung (48) gelieferten Absolutwert der Verschiebungsdifferenz zwischen den Bildern und vom Wert "Epsilon" zu berechnen, sowie mit wenigstens einer Vergleichsschaltung (56, 57) zum Begrenzen des von der Korrektur-Recheneinrichtung (55) erhaltenen Wertes der Korrekturterme verbunden ist.

25. Einrichtung gemäß Anspruch 24, dadurch gekennzeichnet, daß ein Block für die Berechnung von neuen Verschiebungen versehen ist mit Subtraktionsschaltungen (58, 59), um bei jeder neuen Iteration, die von der Inkrement-Berechnungseinrichtung (54) gesteuert wird, vom in der vorhergehenden Iteration berechneten und im Initialisierungsblock (24) befindlichen Verschiebungswert die Korrekturterme zu subtrahieren, um in jeder neuen Iteration die neuen Verschiebungswerte zu erhalten und sie im Initialisierungsblock (23) anzuordnen.

## Claims

1. A method for estimation of movement in a sequence of animated images of television type wherein each image is constituted by a predetermined number of light dots arranged at the intersections of lines and columns, of the type in which the estimation of the movement is produced by the performance of a gradient algorithm which minimizes the square offset of the local luminance variations of the current point of the image with the point which is homologous to it in the preceding image, characterized in that it consists of initializing (7) performance of the algorithm by values of displacement estimated in accordance with a plurality of directions within the causal adjacent surroundings of the current point and propagating each estimation in the direction of sweep of the lines of the image.

2. The method as claimed in claim 1, characterized in that the direction of sweep alternates every second line.

3. The method as claimed in claim 1 and claim 2, characterized in that it consists of selecting (1) a direction of propagation of the algorithm as a function of the position in the image of the line to with the current point belongs, of calculating the modulus of the gradient (2) of the current point in order to compare it with a predetermined threshold value, of selecting (4) a displacement for the current point in causal surroundings of the point when the modulus of the gradient produced is under the predetermined threshold value while retaining the displacement which leads to the inter-image difference which is lowest or of estimating (5 and 6) a new displacement when the gradient modulus predetermined in greater than the predetermined threshold value.

4. The method as claimed in claim 3, characterized in that when the gradient modulus produced is greater than the predetermined threshold value the method consists of performing a simultaneous estimating calculation (4) on a predetermined number N of displacements starting with N initial displacement values and of retaining the displacement value $D_i$ ($0 < i < i_{MAX}$) which leads to a convergence with the mionimum shifted inter-image difference $|DFD(D_i)|$ (6).

5. A device for performing the method as claimed in any one of the preceding claims (1 through 4; 13 through 20) characterized in that it comprise an image memory (19) in order to store the luminance values of predetermined number of image points surrounding the homolog P(z, t-1) of the current point T(z, t) in the image raster $IMS_{(t-1)}$ preceding the raster of the current point $IMS_{(t)}$, a device for calculating the gradient modulus of the current point (20), a first and second deciding means (22 and 22 bis) and a displacement device (23) coupled with the image memory (19) and with the first and the second deciding means (22 and 22 bis) in order to estimate displacement values in a plurality of directions, the outputs of the two deciding means (22 and 22 bis) being coupled with the inputs of a switching device (21) controlled by the device for calculating the modulus of the current gradient (20) if the value of the current gradient modulus is less than or equal to a value of the predetermined threshold the displacement retained is that coming from the second deciding means (22 bis) and if not the retained displacement is that coming from the first deciding means (22).

6. The device claimed in claim 5, characterized in that the device for estimating displacement comprises an initializing block (24) in order to store the initial displacements in a plurality of directions coupled with a calculation unit (27 --- 46) in order too calculate, from these initial values, values of displacement for which the gradient algorithm converges.

7. The device as claimed in claim 6, characterized in that the calculation unit is coupled with the deciding means (22) in order to select the displacement value which yields the fastest convergence of the algorithm.

8. The device as claimed in claim 6 and claim 7, characterized in that for each estimated displacement value $D_i$ ($0 \leqq i \leqq i_{MAX}$) the calculation unit comprises convergence test block (28, 33, 38 and 43) coupled with a correction term calculation block (31, 36, 41 and 46) and with a new displacement calculation device (31, 36, 41 and 46).

9. The device as claimed in claim 8, characterized in that the convergence test block comprises on the one hand an interpolation circuit (47) coupled with a device (48) for the calculation of the absolute value of the diplacement inter-image difference and on the other hand a device (51) for gradient calculation coupled with a device (52) for calculation of the sum of the squares of the displaced gradients produced in two directions of horizontal and vertical sweep of the image.

10. The device as claimed in either of the preceding claims 8 and 9, characterized in that the correction term calculation block (29) comprise a device (53) for calculation of the gain of the gradient algorithm coupled with an increment (54) and correction (55) value calculation device.

11. The device as claimed in any one off the preceding claim 8, 9 and 10, characterized in that the device for calculation of the new displacement comprises substracting circuits (58 and 59) in order to calculate the displacement values as a function of the correction terms calculated by the correction term calculation block (31, 36, 41 and 46).

12. The device as claimed in any one the preceding claims 11 and 12, characterized in that each correction

term (TC) supplied by the correction term calculation device equal to the product of the displacement inter-image difference (DFD(Z,D) times the value of the gradient of the diplaced point P(Z,D,t-1) and times the gain of the epsilon algorithm.

13. A method for the estimation of movement as claimed in any one of the preceding claims 1 through 4, characterized in that it consists of determining a field of movement between two successive rasters (Ta and Tb) of a sequence of images in the form of a field of vectors attributed to a fictive image raster (Tj) localized in the vicinity of the two radters (Ta and Tb).

14. The method as claimed in claim 13, characterized in that the direction of sweep of the lines of the fictive raster alternates every second line.

15. The method as claimed in claim 13 and 14, characterized in that it consist of estimating the movement of each pixel in the fictive raster Tj in the form of a movement vector D(Z,Tj) corresponding to the displacement of the pixel P(Z,Tj) between the rasters at instants Ta and Tb, said vector extending through the current point P(Z,Tj) and having respectively its extremities on the image rasters for the instant Ta, Tb, the estimation being performed by effecting an iterative calculation of the displacement vectors Di(Z,Tj) in accordance with a gradient algorithm, which minimizes the square of the offset of the local luminance variations of the current point in the fictive raster for the instant Tj.

16. The method as claimed in claim 14, characterized in that each displacement Di(Z,Tj) of an iteration i is produced starting from the displacement vector Di-1(Z,Tj) produced at the preceding iteration i-1 by the equation:

$$Di(Z,Tj) = Di\text{-}1(Z,Tj) - (DFD(Z,Di\text{-}1).gradL(Z,Di\text{-}1))).gradL(Z,Di\text{-}1))^2)^{-1}$$

wherein Z: denotes the coordinates in the spaces of the current point P(Z,Tj) for which the movement vector D(Z,Tj) is estimated,

– DFD(Z,Di-1) designates the displaced inter-raster difference calculated vbetween the rasters for the instants TA and Tb;

– and grad L(Z,Di-1) designates the space gradient for the half sum of the space gradients at the extremities of the displacement vector Di-1 on the rasters for the instant Ta and Tb.

17. The method as claimed in claim 16, characterized in that the estimation of the movement vector D,(Z,Tj) for the current point of the pixel P(Z,Tj) is calculated on the basis of four initialization displacement vectors corresponding to the movement vectors already estimated for four adjacent points in the causal surroundings of the current point, the four initialization displacement vectors giving rise to four estimated movement vectors, only that movement vector being retained, which of the four estimated ones gives the convergence of the algorithm of the gradient with the smallest inter-raster difference.

18. The method as claimed in either claim 16 or claim 17, characterized in that the displaced inter-raster difference DFD(Z,Di-1) is produced by obtaining the time difference in the direction Di-1 of displacement of the luminance values of the current displacement point P(Z,Tj) in the rasters for the instants Ta and Tb.

19. The method as claimed in claim 18, characterized in that the luminance values LA and LB of the current displaced point displaced respectively in the rasters for the instants Ta and Tb are produced by bi-linear interpolation of the luminance values In of the 4 pixel surrounding the point, which is the extremity of the vector considered, in Ta and Tb respectively.

20. The method as claimed in any one of the preceding claims 15 through 19, characterized in that each displacement vector Di is produced by substraction of the displacement vector Di-1, calculated in the preceding iteration, of a correction term equal to the product of the displaced inter-raster difference DFD(Z,Di-1) on the one hard times the space luminance gradient L(Z,Di-1) and the other hand times the reciprocal of the space gradients at the extremities of the displacement vector Di-1 on the rasters for the instants Ta and Tb.

21. The device as claimed in any one of the preceding claims 5 through 8, characterized in that it comprises: a line memory (18) coupled with a raster memory (19) in order to store respectively the luminance values of a predetermined number of image points surrounding the homologs of the current point P(Z,Ti) and of the points surrounding it in the rasters of the instants Ta and Tb, a displacement estimating device (23) coupled with the line memory (18), with the raster memory (19) in order to estimate displacement values in a plurality of directions and with a deciding means in order to calculate, on the basis of luminance values of the points contained on the line memory and the raster memory and on the basis of at least one initial displacement values contained in an initialization block (24), a displacement vector for each current point P(Z, Tj) of the image.

22. The device as claimed in claim 21, characterized in that the device for estimating displacement comprises at least one convergence test block (28, 33, 38, 43), a correction term calculating block (29, 34, 39, 44) and a new displacement calculation block (31, 36, 41 and 46).

23. The device as claimed in claim 22, characterized in that a convergence test block comprise on the one band a first interpolation circuit (47) in order to determine the luminance of the current point displaced in the raster for the instant Ta, a second interpolation circuit (47 bis) in order to determine the luminance of the current

point displaced in the raster for the instant Tb, and a calculating device (48) coupled with the first and with second interpolation circuit (47) and (47 bis) in order to calculate, as a function of the luminance values calculated by the first (47) and the second (47 bis) interpolation circuit, the absolute value of the displaces inter-image difference, the output of the calculating device (48) being coupled with the deciding means (22) via a first (49) and a second (50) switch, and on the other hand a first and a second gradient calculating device (51 and 51 bis) coupled with a third device (52) for calculating the means of the gradient formed by the first and the second calculating device, the third calculating device (52) being coupled with a fourth device (52 bis) for calculating the sum of the squares of the displaced mean gradients.

24. The device as claimed in claim 22 and claim 23, characterized in that a correction term block comprises a fifth device (53) for the calculation of an "epsilon" value to the reciprocal, divided by two, of the sum of the squares of the displaced mean gradients supplied by the fourth calculating device (52 bis) coupled via an increment calculating device (54) with a device (55) for calculating the correction which is coupled on the one hand with the third calculating device (52) and on the other hand with the second switch (50) in order to calculate corrections terms as a function of the displaced absolute value of the inter-image difference by the calculating device (48) and of the "epsilon" value as well as at least one comparison circuit (56 and 57) in order to limit the value of the correction terms from the correction calculating device (55).

25. The device as claimed in claim 24, characterized in that a block for the calculation of new displacements comprises a substracting circuit (58 and 59) in order to substract the correction terms in each new iteration caused by the increment calculating device (54), from the value of the displacement calculated in the preceding iteration and arranged in the initialization block (24) in order to produce new displacement values for each new iteration and to arrange them in the initialization block (23).

FIG_1

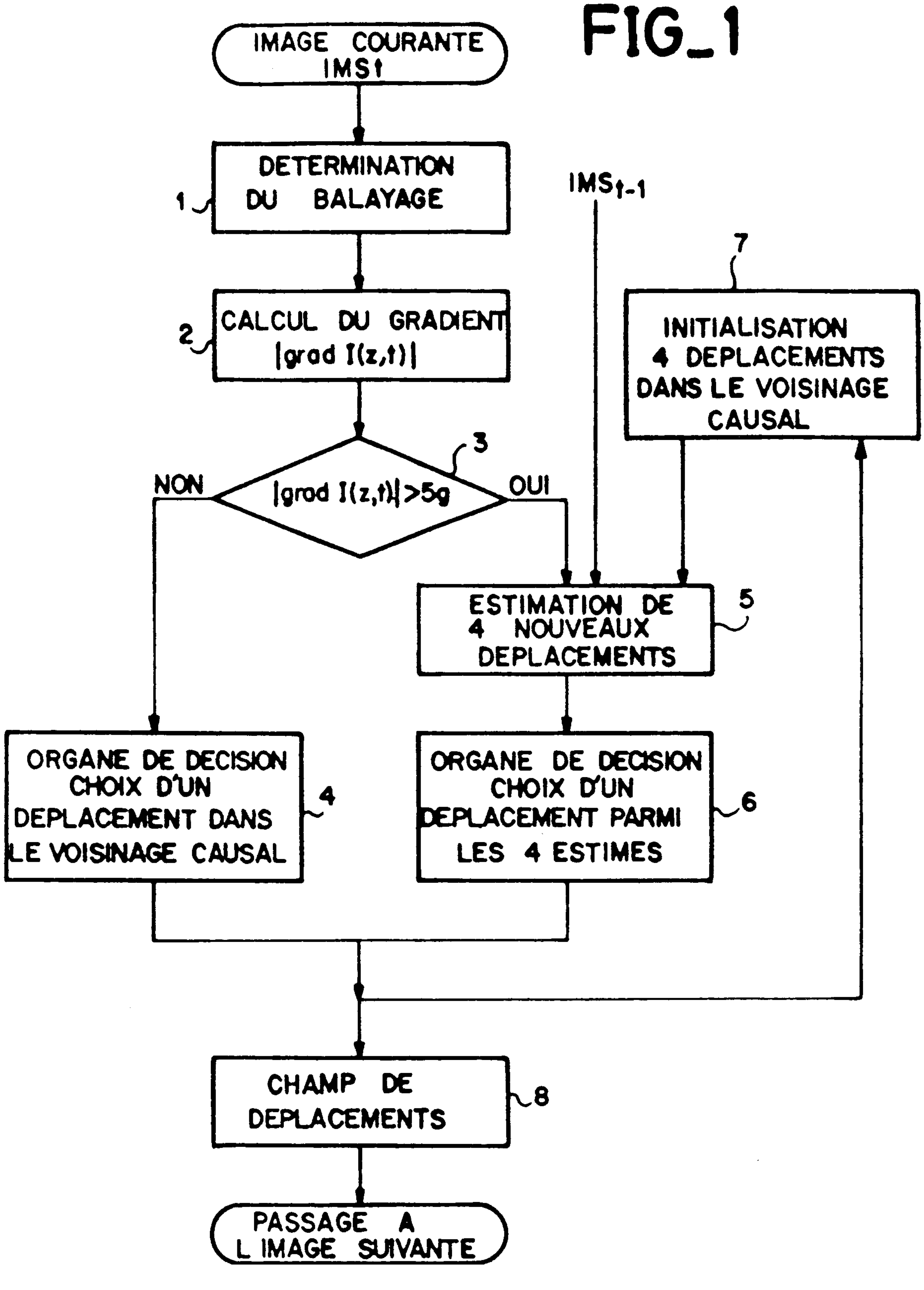
IMAGE COURANTE
IMSt
DETERMINATION DU BALAYAGE
1
IMSt-1
7
CALCUL DU GRADIENT
|grad I(z,t)|
2
INITIALISATION 4 DEPLACEMENTS DANS LE VOISINAGE CAUSAL
3
NON
|grad I(z,t)|>5g
OUI
ESTIMATION DE 4 NOUVEAUX DEPLACEMENTS
5
ORGANE DE DECISION CHOIX D'UN DEPLACEMENT DANS LE VOISINAGE CAUSAL
4
ORGANE DE DECISION CHOIX D'UN DEPLACEMENT PARMI LES 4 ESTIMES
6
CHAMP DE DEPLACEMENTS
8
PASSAGE A L IMAGE SUIVANTE

# FIG_6

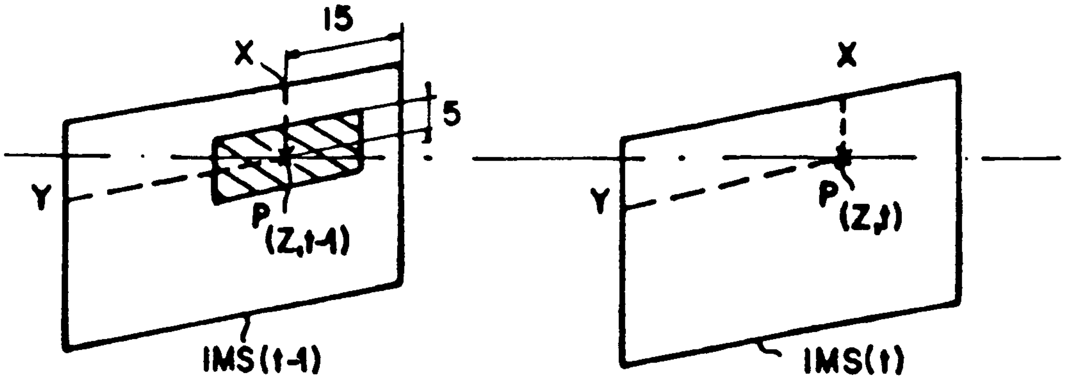


# FIG_10A

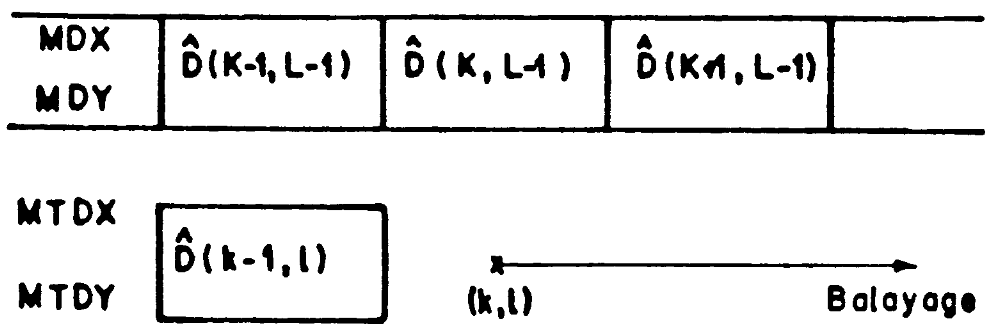


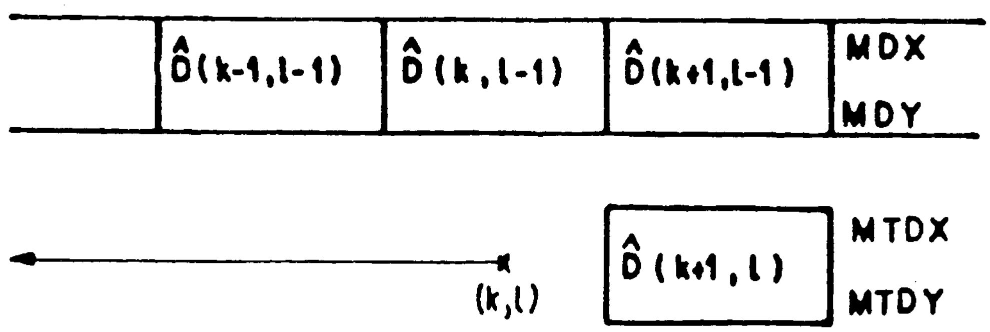


# FIG_10B

FIG_2

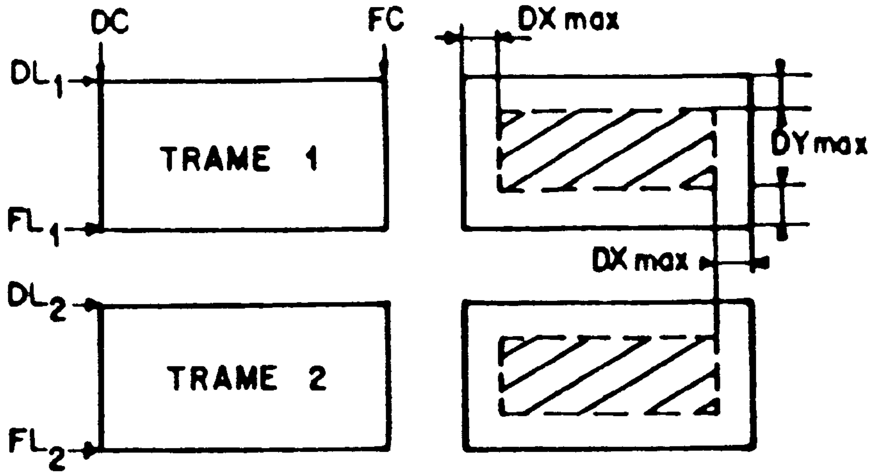


FIG_3A

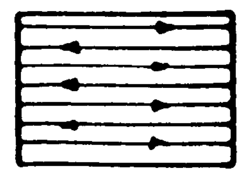

FIG_3B

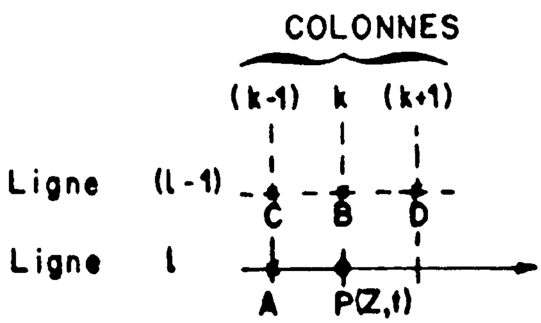


FIG_3C

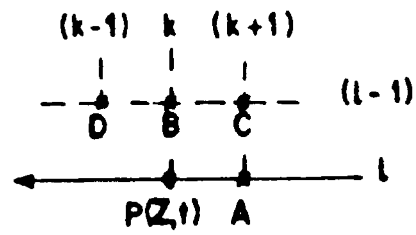


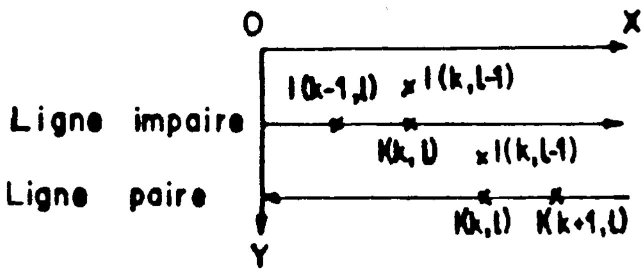


FIG_4

FIG_5

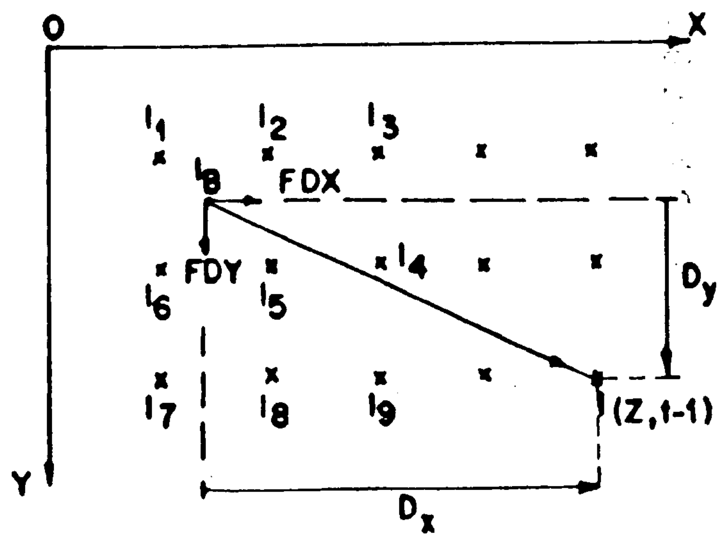

FIG_8

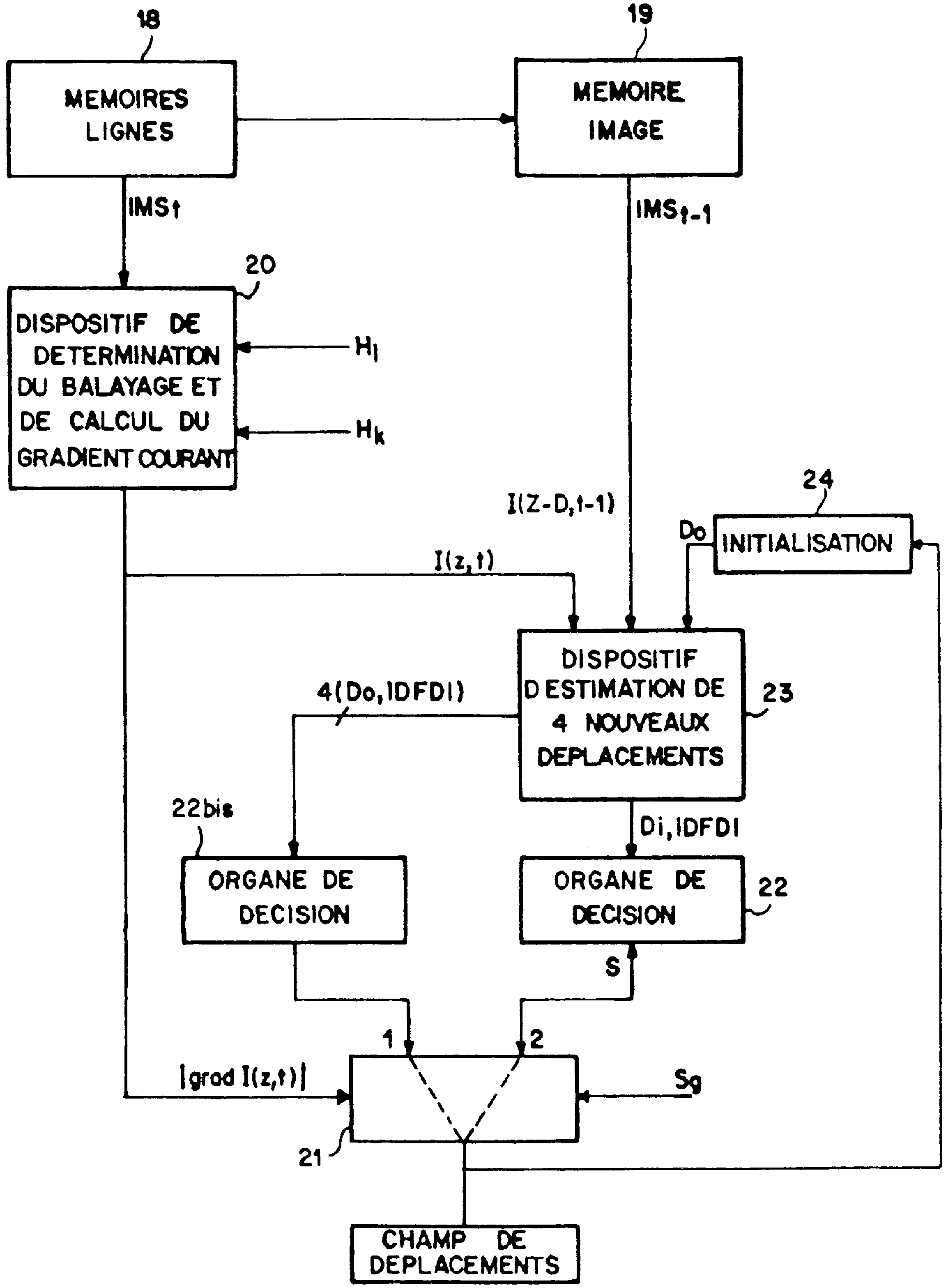
18
MEMOIRES LIGNES
19
MEMOIRE IMAGE
IMSt
IMSt-1
20
DISPOSITIF DE DETERMINATION DU BALAYAGE ET DE CALCUL DU GRADIENT COURANT
Hl
Hk
I(Z-D,t-1)
24
Do
INITIALISATION
I(z,t)
4(Do,IDFDI)
DISPOSITIF D ESTIMATION DE 4 NOUVEAUX DEPLACEMENTS
23
22bis
Di,IDFDI
ORGANE DE DECISION
ORGANE DE DECISION
22
S
1
2
|grad I(z,t)|
Sg
21
CHAMP DE DEPLACEMENTS

FIG_7

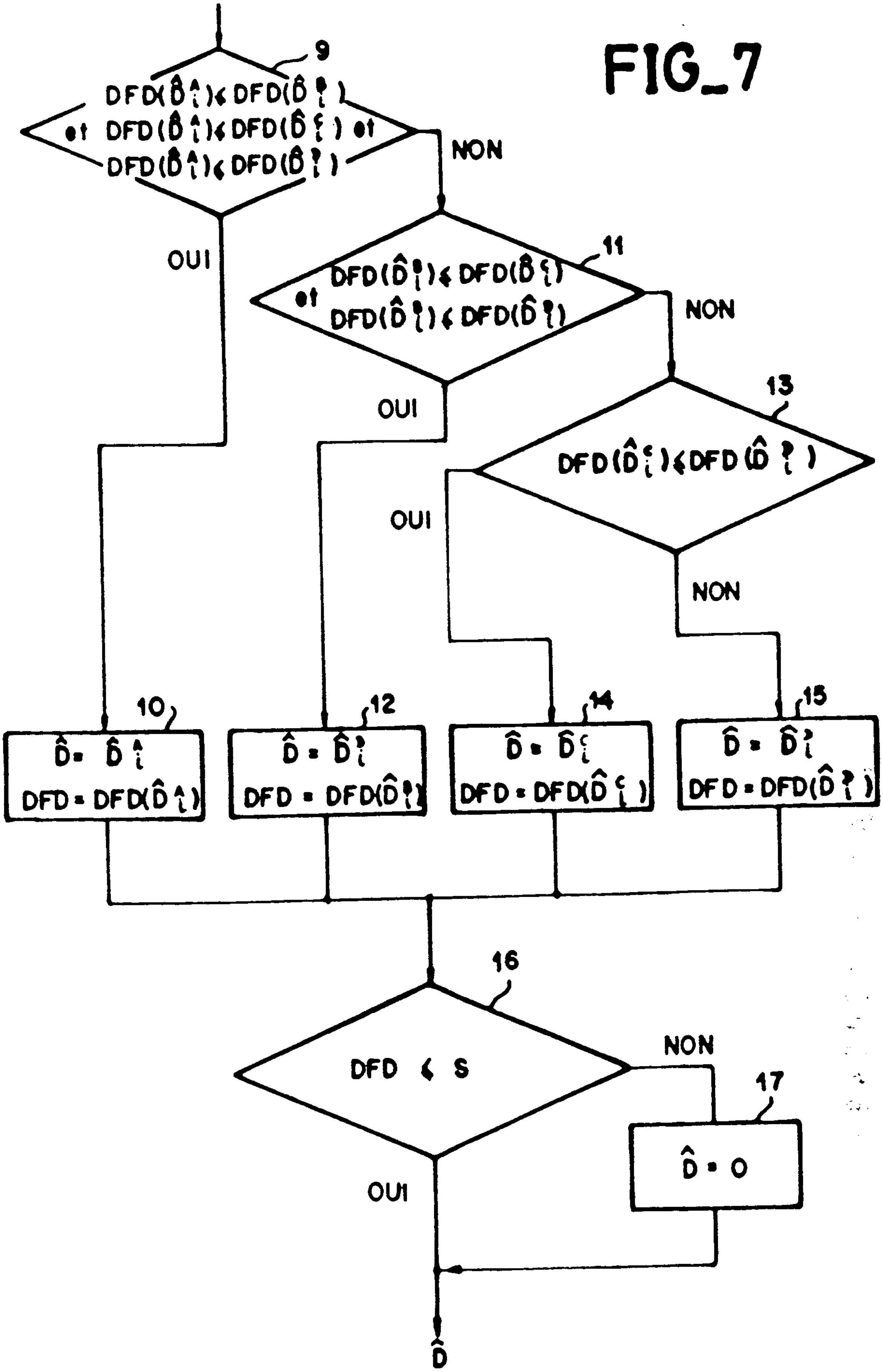
9
NON
OUI
11
et
NON
OUI
13
OUI
NON
10
12
14
15
DFD = DFD
16
DFD ≤ S
NON
17
D̂ = 0
OUI
D̂

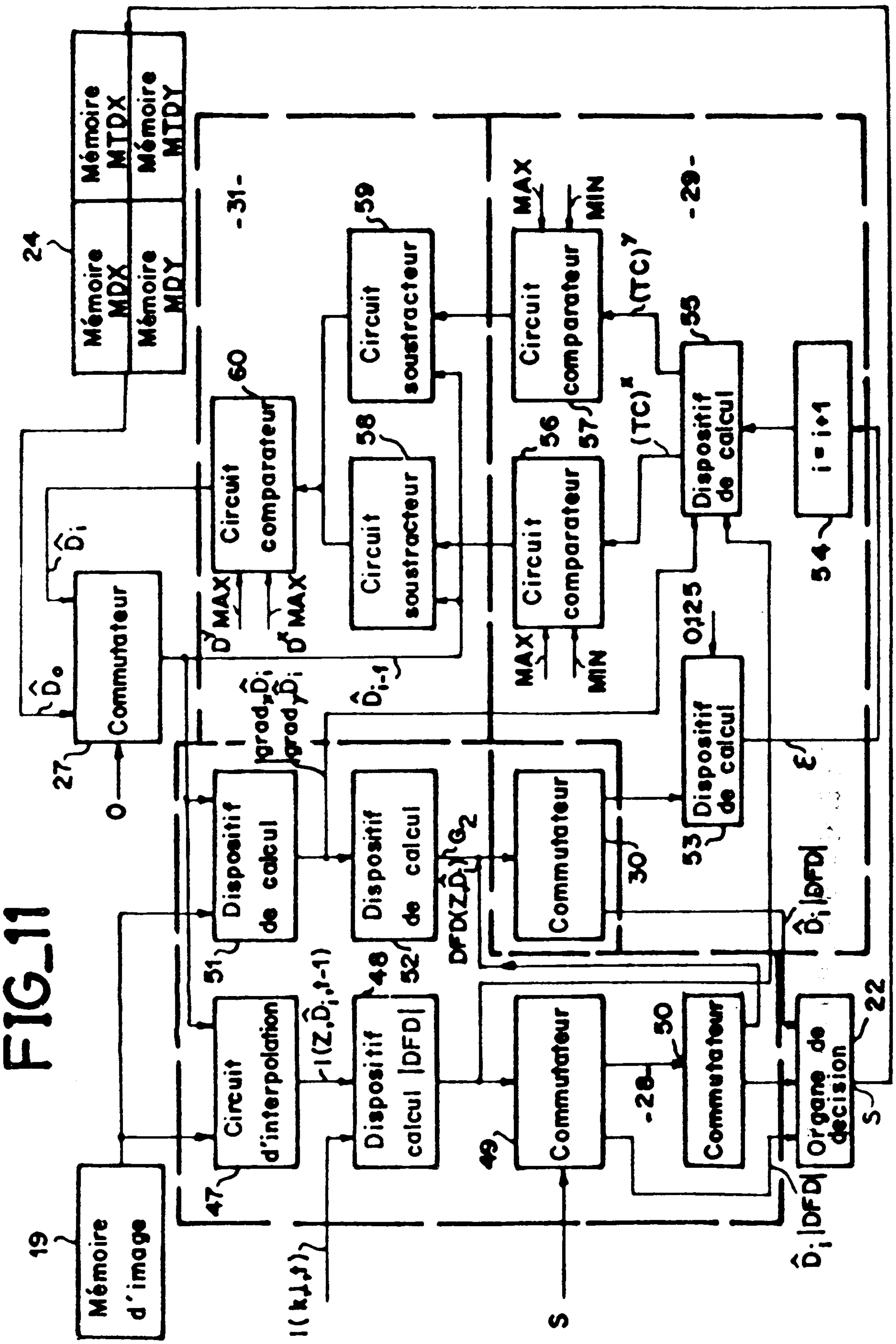
19
Mémoire d'image
47
Circuit d'interpolation
48
Dispositif calcul |DFD|
49
Commutateur
-28-
50
Commutateur
22
Organe de decision
S
I(k,l,t)
I(Z,D̂i,t-1)
D̂i |DFD|
51
Dispositif de calcul
52
Dispositif de calcul
DFD(Z,D̂i)
G2
Commutateur
30
53
Dispositif de calcul
ε
0,125
27
O
Commutateur
D̂o
D̂i
D̂i-1
gradx D̂i
grady D̂i
Dx MAX
Dy MAX
24
Mémoire MDX
Mémoire MDY
Mémoire MTDX
Mémoire MTDY
60
Circuit comparateur
58
Circuit soustracteur
59
Circuit soustracteur
-31-
56
Circuit comparateur
57
Circuit comparateur
MAX
MIN
(TC)x
(TC)y
55
Dispositif de calcul
54
i = i+1
-29-

FIG_11

FIG_9

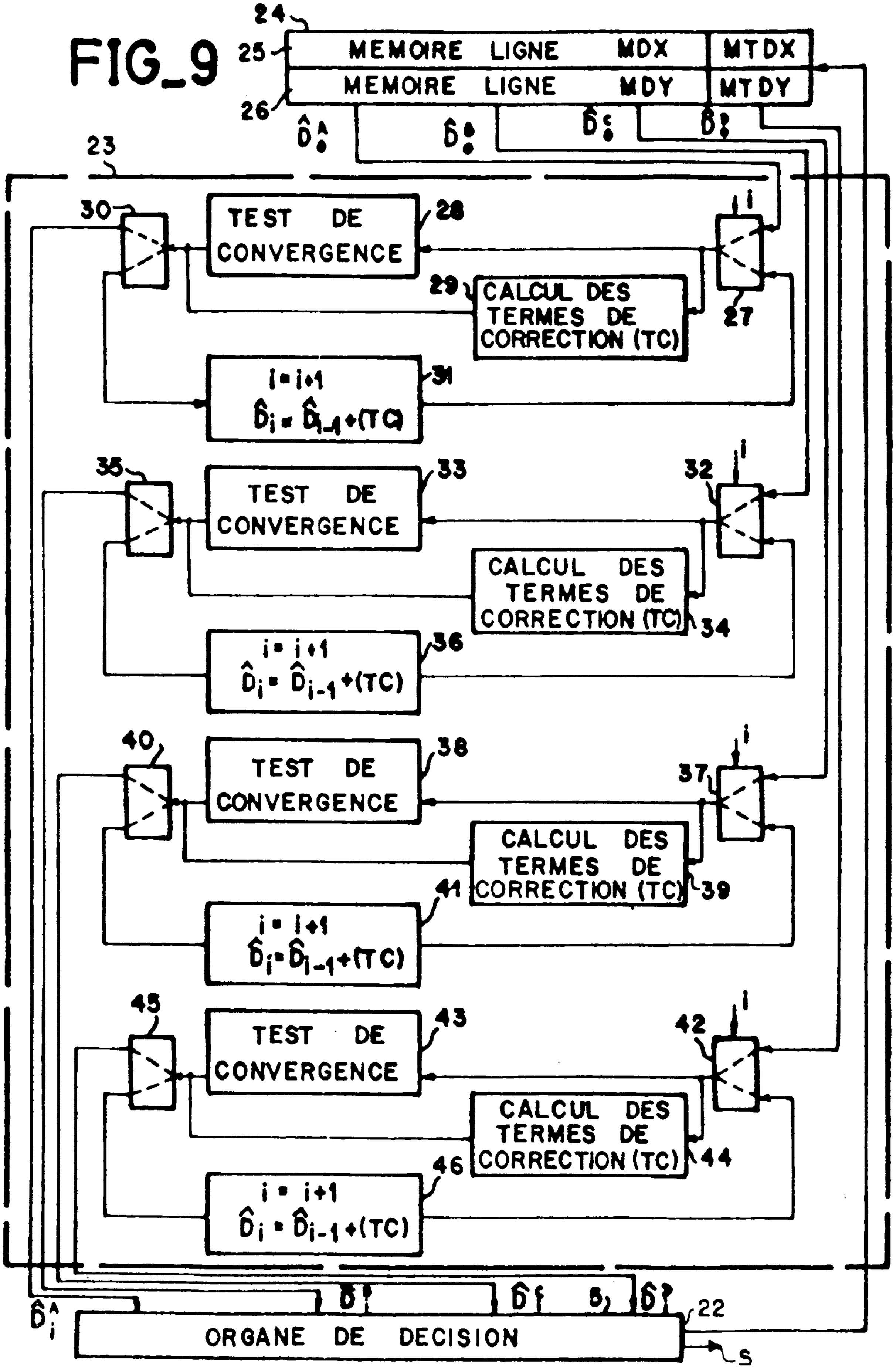

MEMOIRE LIGNE MDX
MTDX
MEMOIRE LIGNE MDY
MTDY
TEST DE CONVERGENCE
CALCUL DES TERMES DE CORRECTION (TC)
i = i+1
$\hat{D}_i = \hat{D}_{i-1} + (TC)$
ORGANE DE DECISION
S
24
25
26
23
27
28
29
30
31
32
33
34
35
36
37
38
39
40
41
42
43
44
45
46
22

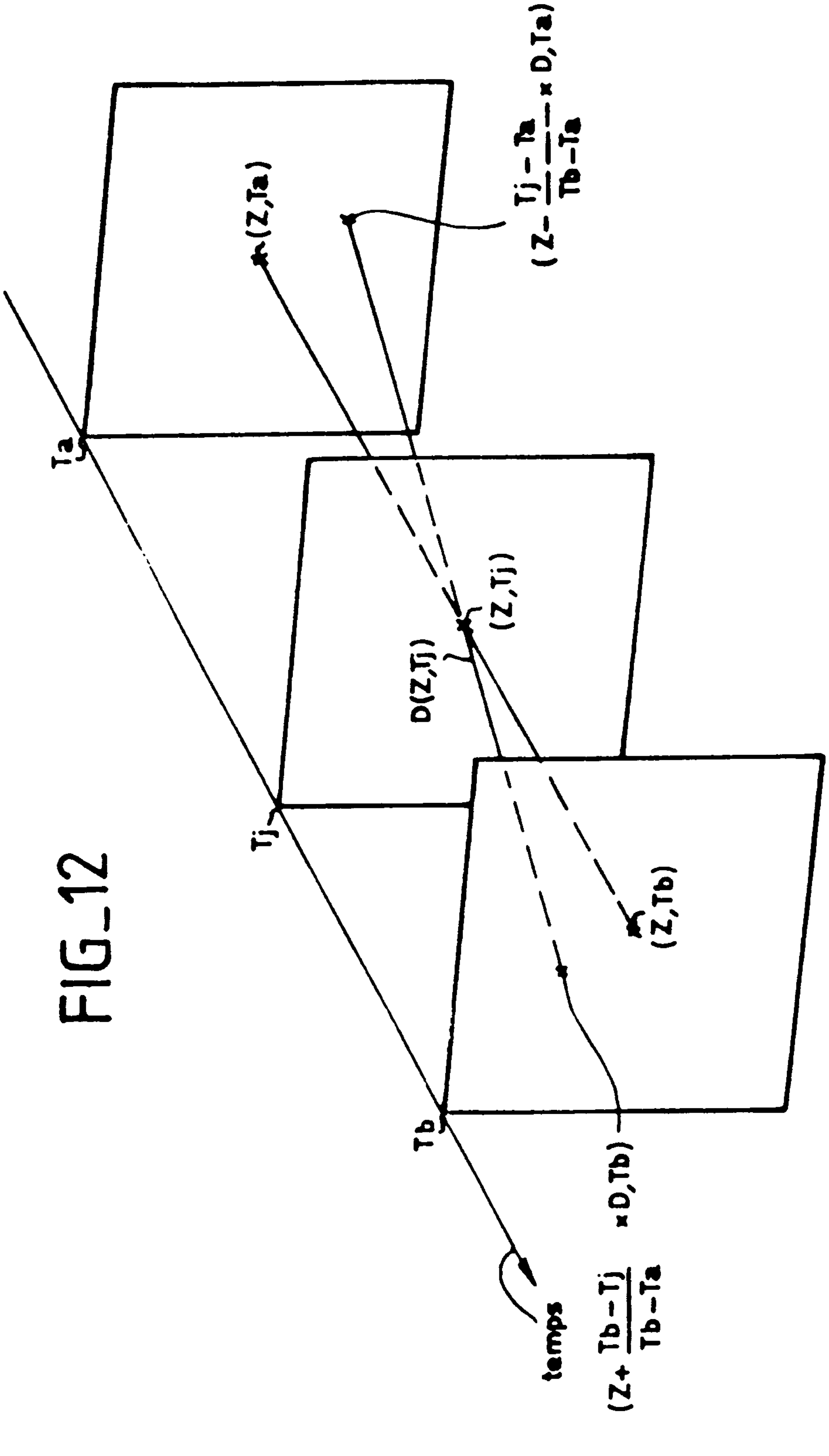
(Z,Ta)
$(Z - \frac{Tj - Ta}{Tb - Ta} \times D, Ta)$
Ta
Tj
Tb
(Z,Tj)
D(Z,Tj)
(Z,Tb)
$(Z + \frac{Tb - Tj}{Tb - Ta} \times D, Tb)$
temps

FIG_12

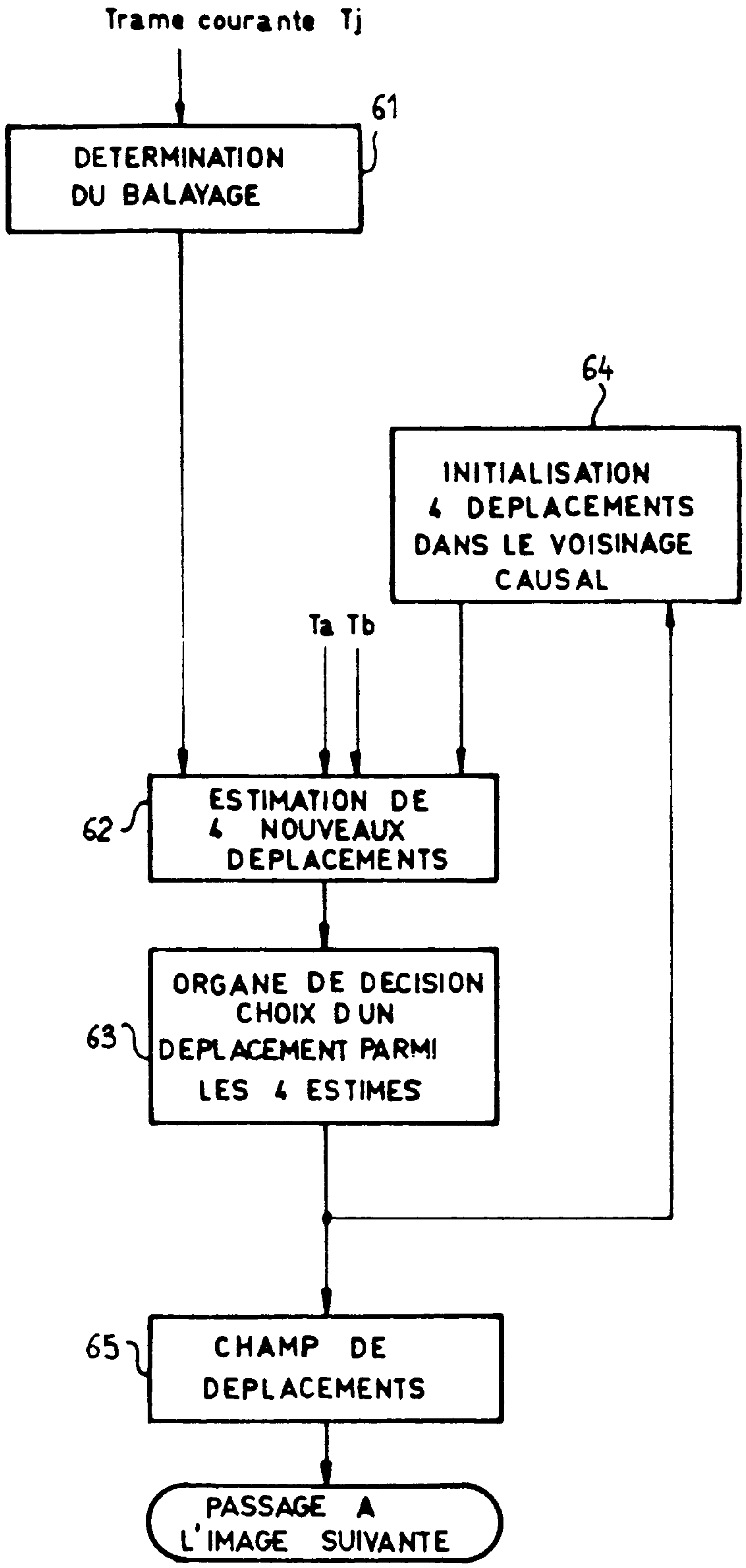
Trame courante Tj
61
DETERMINATION DU BALAYAGE
64
INITIALISATION 4 DEPLACEMENTS DANS LE VOISINAGE CAUSAL
Ta Tb
62
ESTIMATION DE 4 NOUVEAUX DEPLACEMENTS
63
ORGANE DE DECISION CHOIX D UN DEPLACEMENT PARMI LES 4 ESTIMES
65
CHAMP DE DEPLACEMENTS
PASSAGE A L'IMAGE SUIVANTE

FIG_13

FIG.14A

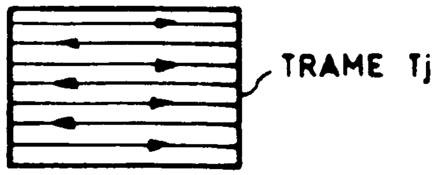


FIG.14B

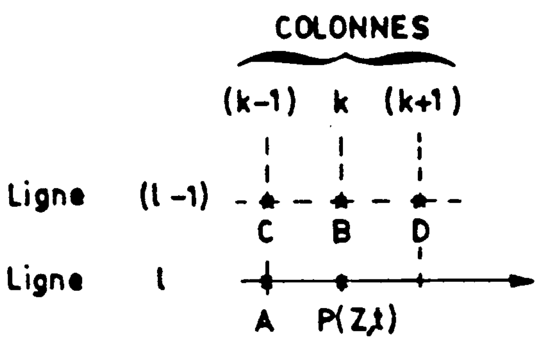


FIG.14C

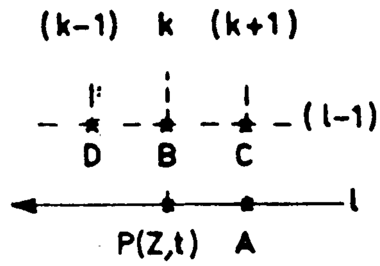


FIG.15

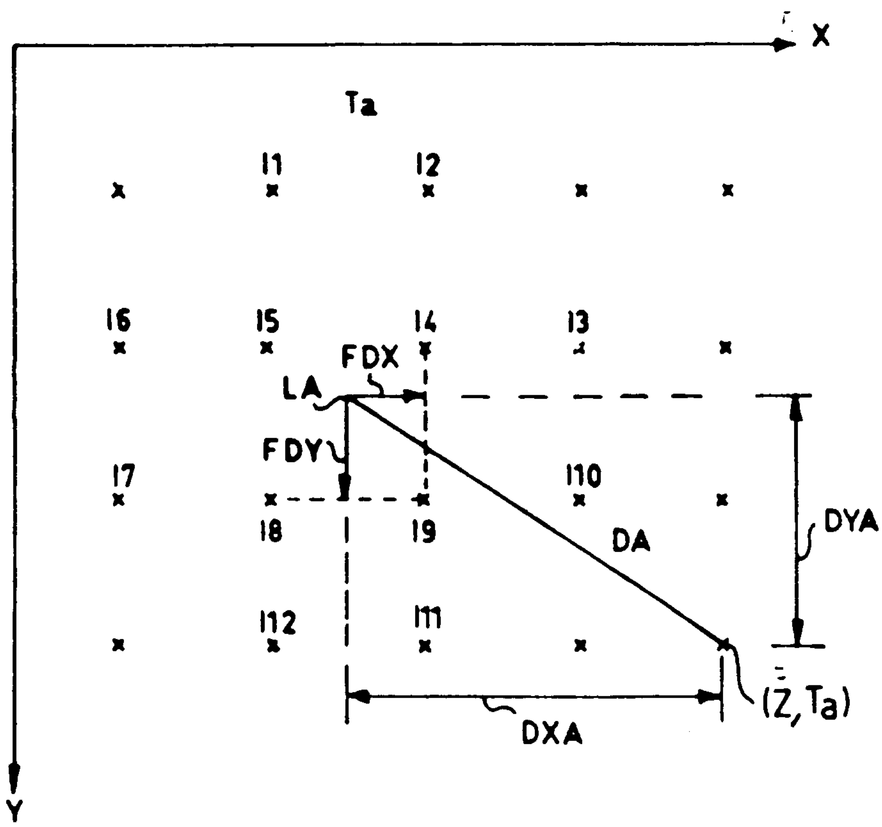

FIG_16

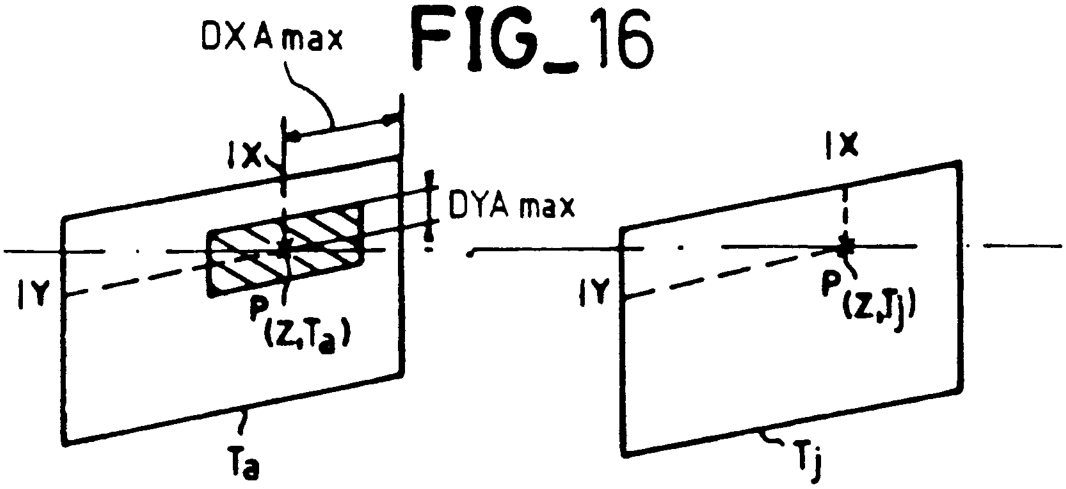


FIG_19A

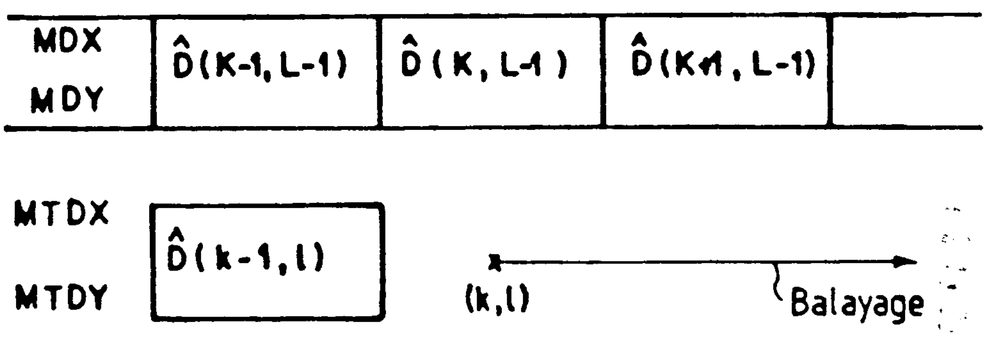


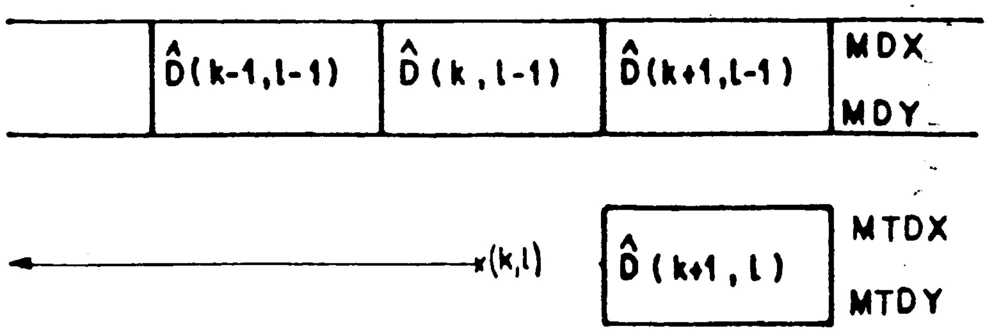


FIG_19B

FIG_18

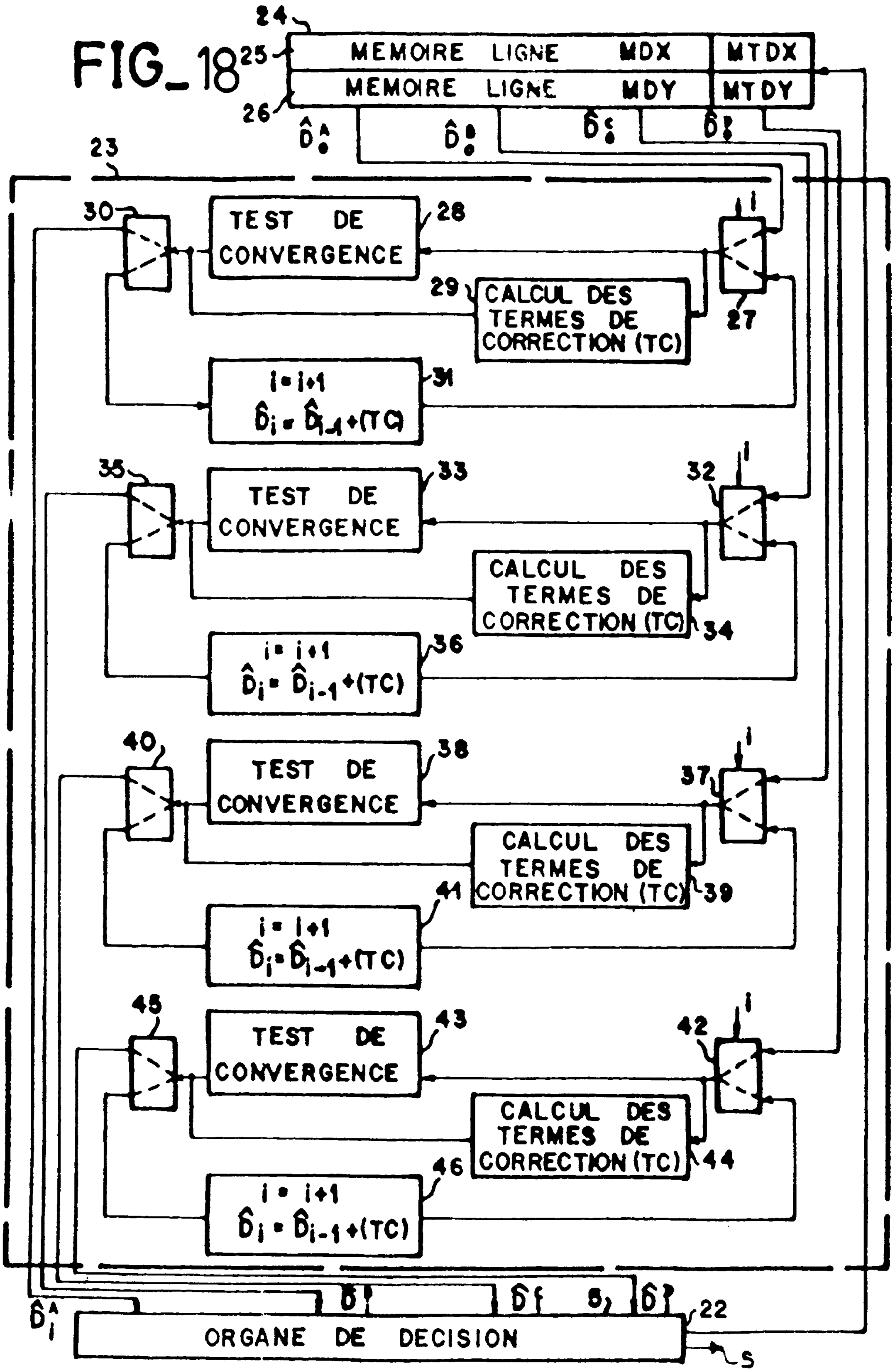
24
25
26
MEMOIRE LIGNE MDX
MTDX
MEMOIRE LIGNE MDY
MTDY
23
30
TEST DE CONVERGENCE
28
29
CALCUL DES TERMES DE CORRECTION (TC)
27
i = i+1
31
35
TEST DE CONVERGENCE
33
32
CALCUL DES TERMES DE CORRECTION (TC)
34
i = i+1
36
40
TEST DE CONVERGENCE
38
37
CALCUL DES TERMES DE CORRECTION (TC)
39
41
i = i+1
45
TEST DE CONVERGENCE
43
42
CALCUL DES TERMES DE CORRECTION (TC)
44
46
i = i+1
ORGANE DE DECISION
22
S

FIG.17

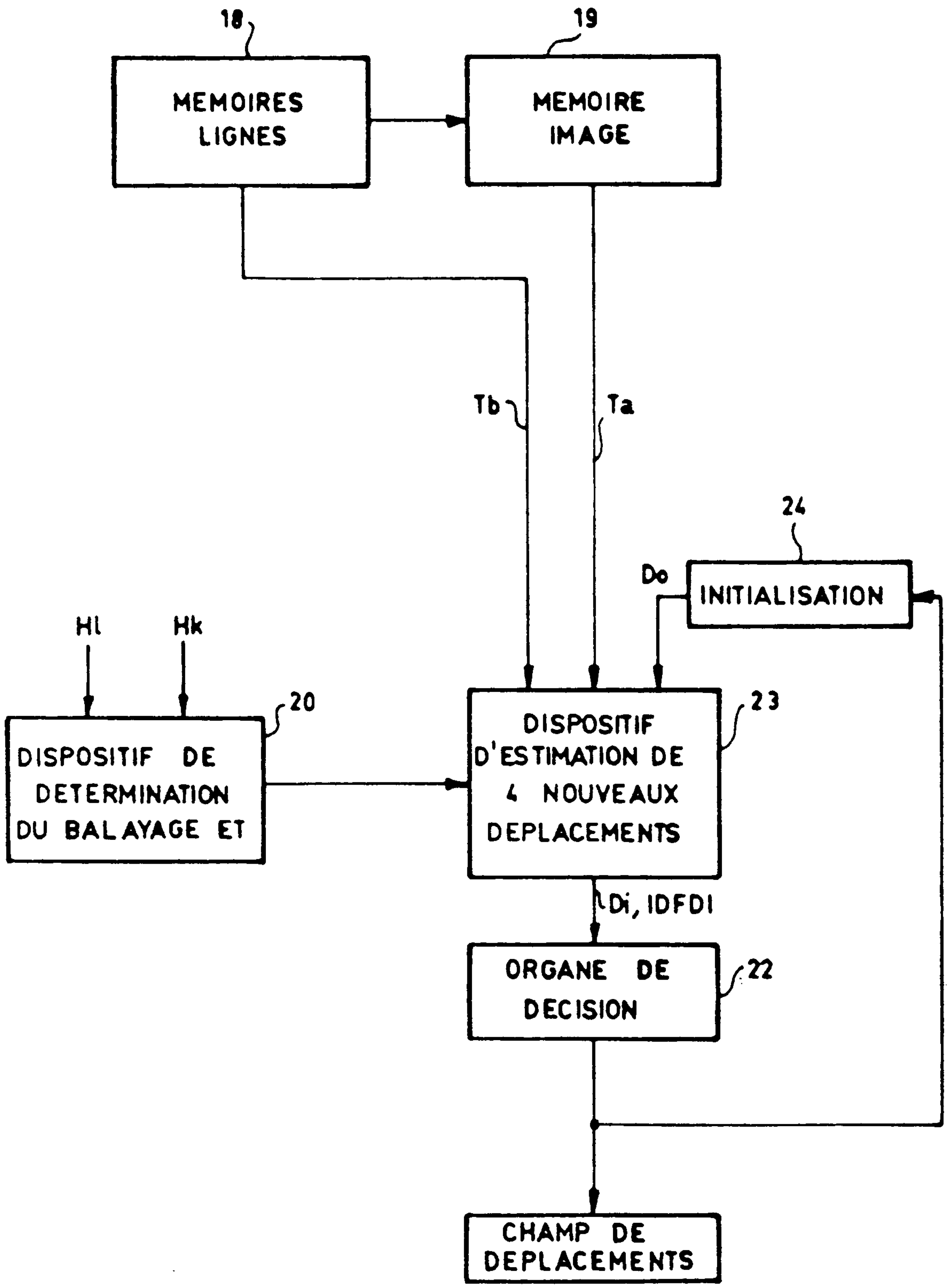
18
19
MEMOIRES LIGNES
MEMOIRE IMAGE
Tb
Ta
24
Do
INITIALISATION
Hl
Hk
20
23
DISPOSITIF DE DETERMINATION DU BALAYAGE ET
DISPOSITIF D'ESTIMATION DE 4 NOUVEAUX DEPLACEMENTS
Di, IDFDI
ORGANE DE DECISION
22
CHAMP DE DEPLACEMENTS

FIG. 20

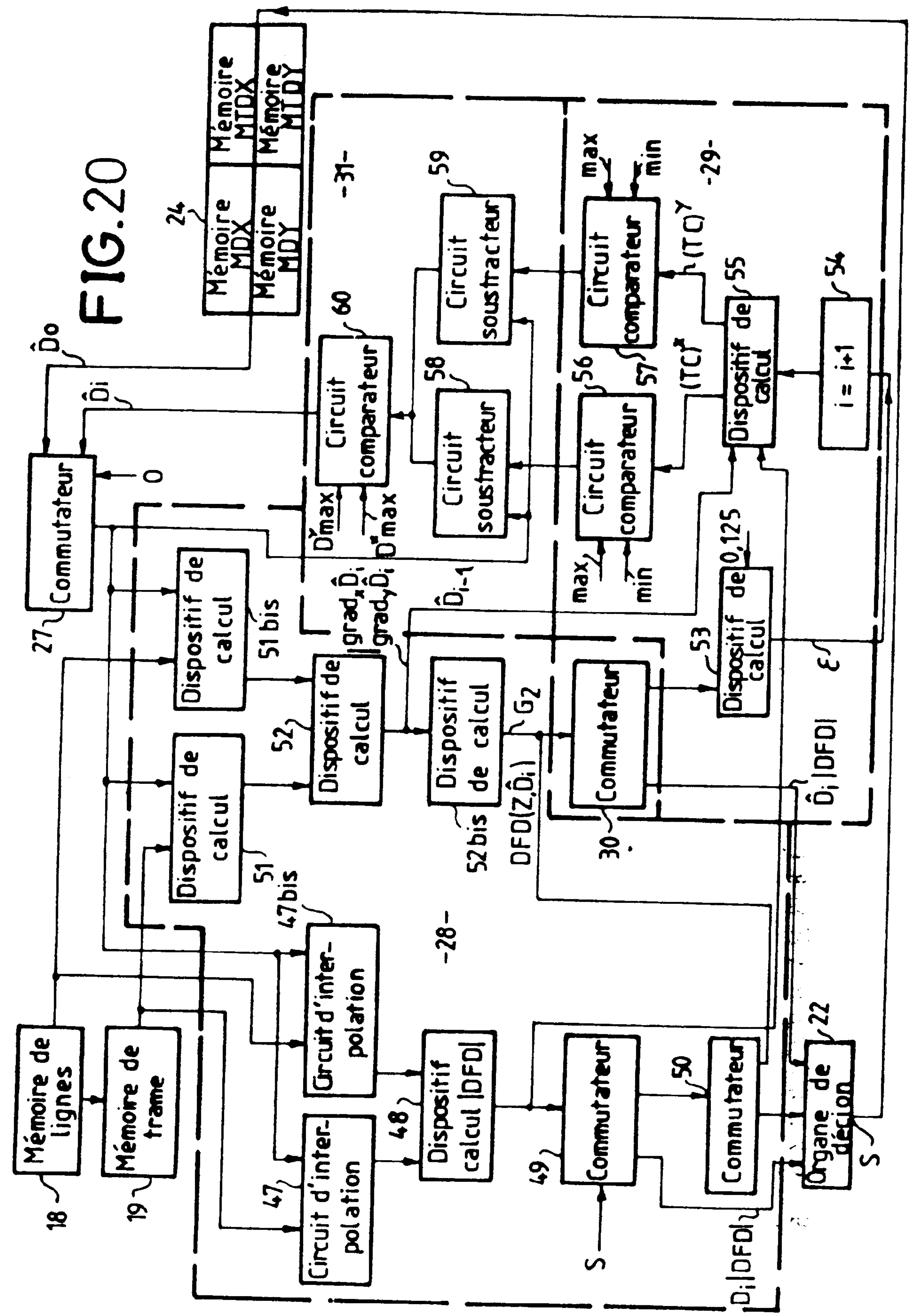
Mémoire de lignes
Mémoire de trame
Circuit d'interpolation
Circuit d'interpolation
Dispositif calcul |DFD|
Commutateur
Commutateur
Organe de décion
Dispositif de calcul
Dispositif de calcul
Dispositif de calcul
Dispositif de calcul
Dispositif de calcul
Dispositif de calcul
Commutateur
Commutateur
Circuit comparateur
Circuit comparateur
Circuit comparateur
Circuit soustracteur
Circuit soustracteur
i = i+1
Mémoire MDX
Mémoire MDY
Mémoire MTDX
Mémoire MTDY
18
19
22
24
27
-28-
-29-
30
-31-
47
47bis
48
49
50
51
51 bis
52
52bis
53
54
55
56
57
58
59
60
S
Do
Di
0
max
min
0,125
DFD(Z,Di)
G2
ε
Di |DFD|